# EUROPÄISCHE PATENTSCHRIFT

(11) **EP 2 371 454 B1**
(45) Veröffentlichungstag und Bekanntmachung des Hinweises auf die Patenterteilung: **20.11.2019**
(21) Anmeldenummer: 11160008.6
(22) Anmeldetag: 28.03.2011
(51) Int. Cl.: B01L 3/00, G01F 23/26

(54) **Kapazitives Messverfahren und Vorrichtung zur Füllstandsdetektion und entsprechend ausgestattetes Laborgerät**
Capacitative measuring method and device for detecting fill levels and laboratory device with same
Procédé de mesure capacitif et dispositif pour la détection du niveau de remplissage et appareil de laboratoire en étant équipé

(30) Priorität: 31.03.2010 CH 4682010
(43) Veröffentlichungstag der Anmeldung: 05.10.2011
(73) Patentinhaber: Tecan Trading AG, 8708 Männedorf (CH)
(72) Erfinder: Camenisch, Hans, 7000 Chur (CH); Hinn, Werner, 8712 Stäfa (CH); Kamm, Lars, 9718 Schänis (CH); Kuenzi, Simon, 8706 Feldmeilen (CH)
(74) Vertreter: OK pat AG

(56) Entgegenhaltungen:
- EP-A2- 0 509 532
- EP-B1- 0 807 244
- WO-A1-2006/108811
- WO-A2-2008/064500
- DE-A1- 19 645 970
- FR-A1- 2 765 329
- FR-A1- 2 765 331
- FR-A1- 2 875 007

## Beschreibung

Die Erfindung betrifft kapazitive Messverfahren und Vorrichtungen zur Füllstandsdetektion und ein entsprechend ausgestattetes Laborgerät. Insbesondere geht es um Laborgeräte, die zum Ermitteln des Füllzustands in mehreren Behältern ausgelegt sind.

Es wird die Priorität der Schweizer Patentanmeldung CH 00468/10 beansprucht, die am 31.3.2010 eingereicht wurde.

### Hintergrund der Erfindung

Zum Messen physikalischer Grössen, wie beispielsweise Druck, Füllzustand, Volumen oder der relativen Dielektrizitätszahl, werden teilweise kapazitive Sensoren eingesetzt. Diese Sensoren detektieren eine Veränderung der Kapazität eines einzelnen Kondensators oder eines ganzen Kondensatornetzwerks, die sich als Reaktion auf eine zu messende physikalische Grösse ergibt. Durch Messung der Kapazität des Sensors kann somit die zu messende physikalische Grosse betrachtet werden. Kapazitive Sensoren werden entweder einzeln oder in Anordnungen von mehreren räumlich eng benachbarten Sensoren eingesetzt. Kapazitive Einzelsensoren werden beispielsweise zur Druck-, Beschleunigungs- und Positionsmessung verwendet. Kapazitive Anordnungen bzw. Mehrfachsensorsysteme finden beispielsweise bei einem kapazitiven Touch-Pad oder bei kapazitiven Fingerabdrucksensoren Anwendung.

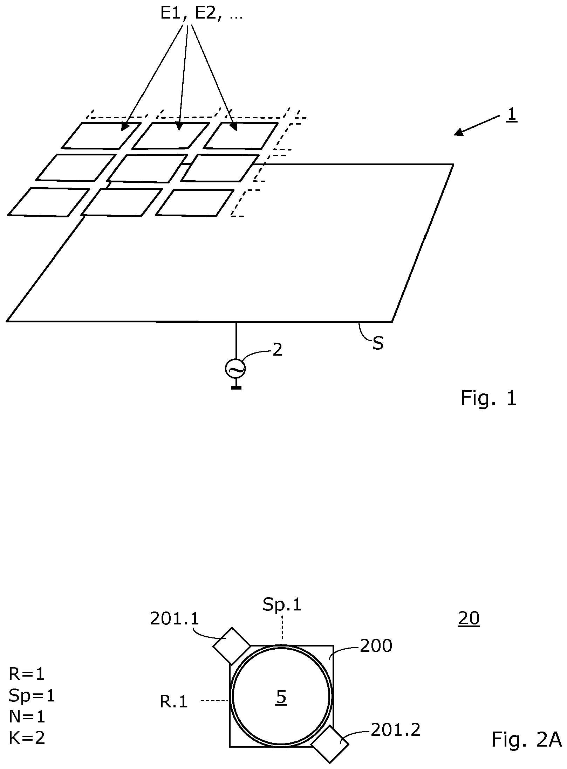

Fig. 1 zeigt beispielhaft eine schematische Darstellung einer kapazitiven Sensoranordnung 1 mit mehreren kapazitiven (Mess-) Sensoren, die hier durch eine gemeinsame Sendeelektrode S und mehrere Empfangselektroden E1, E2, .... gebildet werden. Es kommt eine gemeinsame Sendeelektrode S für alle Sensoren zum Einsatz. Die Empfangselektroden E1, E2, ... sind beabstandet von der Sendeelektrode S angeordnet. Es ist eine Signalquelle 2 zur Ansteuerung, bzw. zum Betrieb der Sensoranordnung 1 vorgesehen. Mit einer solchen Sensoranordnung 1 mit mehreren kapazitiven Sensoren können dreidimensionale dielektrische oder leitfähige Strukturen erfasst und abgetastet werden. So können beispielsweise das Prägebild einer Münze (als Beispiel für eine leitfähige Struktur) oder der Füllzustand einer Mikroplatte, wie sie zum Beispiel in Pipettierautomaten verwendet wird (als Beispiel für eine dielektrische Struktur) erfasst und abgetastet werden. Details zu diesem Ansatz sind der Publikation WO 2008/064500 A2 zu entnehmen.

Es gibt zahlreiche Laborsysteme und medizinische, sowie pharmazeutische Geräte, bei denen es wichtig ist den Inhalt oder Füllstand in Reagenzgläsern, Mikroplatten oder dergleichen zu ermitteln. Besonders wenn es um die Automation von Mess- oder Versuchsabläufen geht, ist eine solche Ermittlung von Bedeutung. Die Füllstandsermittlung erfolgt typischerweise mittels einer Detektion des Flüssigkeitsniveaus, d.h. es wird die Lage der Phasengrenze zwischen Luft und Flüssigkeit ermittelt. Dieser Vorgang wird auch als Liquid Level Detektion (LLD) bezeichnet. Beim sogenannten Liquid Arrival Check (LAC) wird ermittelt, ob Flüssigkeit in einem Behälter angekommen ist, oder ob sich das Volumen, respektive die Flüssigkeitsmenge geändert hat.

In den letzten Jahren wurden die Laborgeräte immer genauer und komplexer. Der Trend geht in Richtung hoher Integration, Automation und Parallelität. Dies führt zu einer hohen räumlichen Verdichtung der einzelnen Komponenten. Diese Verdichtung bringt nicht nur mechanische und andere technische Probleme mit sich, sondern auch die Genauigkeit der elektronischen Auswertbarkeit, das sich gegenseitige Beeinflussen benachbarter Messkanäle durch Übersprechen und andere Aspekte können zu Problemen führen.

Es gibt verschiedene Geräte, die mit Platten oder Gebinden mit einer grossen Anzahl von Flüssigkeitsbehältern auf engstem Raum arbeiten. Hier sind speziell Mikroplatten bzw. Multiwellplatten oder Mikrotiterplatten (vgl. ANSI/SBS Standard 1-2004) zu nennen, die zum Beispiel 96 eng nebeneinander liegende Flüssigkeitsbehälter ("wells" genannt) aufweisen. Manchmal sind diese Mikroplatten nicht von der Rückseite aus zugänglich, da die Mikroplatten auf der Rückseite entweder massiv ausgeführt sind, oder da sie zahlreiche Stege und andere Elemente aufweisen, um der Mikroplatte Stabilität für die Handhabung zu verleihen. Die Erfindung geht trotzdem bewusst den Weg über rückseitig angeordnete Elektrodenpaare, um so eine berührungslose Füllstandsmessung zu realisieren.

Bisherige Lösungen zur Füllstandsermittlung, die z.B. auf Ultraschallbasis arbeiten, brauchen typischerweise mehrere Minuten, um eine Mikroplatte zu vermessen. Ausserdem sind solche Ultraschall-Ansätze relativ ungenau und bieten eine Auflösung von nur 25 µl. Schaum, Miniskuseffekte und andere geometrische Effekte können durch solche Ultraschall-Ansätze nicht zuverlässig ermittelt oder erkannt werden.

Es gibt Lösungen, die mittels Elektroden eine kapazitive Messung des Füllstands eines Behälters vornehmen. Eine beispielhafte Lösung ist z.B. aus dem Dokument GB 2040464 A bekannt. Bei dieser Lösung sind zwei parallele Elektrodenplatten fest an dem Behälter befestigt. Es geht bei dem genannten Dokument um die Füllstandsmessung in Tanks, wie z.B. Wassertanks und dergleichen. Eine weitere kapazitive Messmethode zum Ermitteln des Füllstandes in einem Behälter ist aus der Offenlegungsschrift DE 196 45 970 A1 bekannt. Gemäss dieser Offenlegungsschrift sind eine Sendeelektrode und eine Empfangselektrode einander gegenüber angeordnet. Die Elektroden sind mit einer Messschaltung verbunden. Ein weiterer Ansatz, der einen festen Verbund der Elektroden mit den Behältern vorsieht, ist z.B. aus der Schrift JP 11014430 A (Anmeldenummer JP 19970166153) bekannt. Bei der Lösung gemäss JP 11014430 A geht es um das Ermitteln der Position der Flüssigkeitsoberfläche in Behältern.

Diese Ansätze lassen sich nicht oder nur mit Aufwand an die Situation in komplexen Laborsystemen und medizinischen, sowie pharmazeutischen Geräten anpassen. Vor allem liefern diese Ansätze keine ausreichende Auflösung zum individuellen Ermitteln des Füllstandes in eng benachbarten Behältern. Ausserdem wären die gezeigten Lösungen zu teuer, wenn man sie auf Gruppen anwenden würde, die eine Grosszahl von Behältern umfassen. Ausserdem ist die erreichbare Messgenauigkeit nicht ausreichend.

Mit dem zunehmenden Grad der Automatisierung der Laborgeräte ist es wünschenswert, die entsprechenden Verfahrensabläufe so zu gestalten, dass nur wenig manuelle Interventionen notwendig sind. Dabei ist zu berücksichtigen, dass z.B. in automatisierten Laborgeräten Situationen auftreten können, die von bisherigen automatisierten Laborgeräten nicht selbsttätig gelöst werden können.

Das Dokument EP 0 807 244 B1 wird als nächstliegender Stand der Technik angesehen. EP 0 807 244 B1 offenbart eine Vorrichtung zum kapazitiven Ermitteln des Füllstandes in den einzelnen Behältern einer Gruppe von Behältern. Weitere Vorrichtungen zum kapazitiven Ermitteln des Füllstandes in abnehmbaren Behältern sind aus FR 2 765 329 A1, EP 0 509 532 A2 und WO2008/064500 A2 bekannt.

Es stellt sich daher die Aufgabe, eine Vorrichtung und ein Verfahren zum Ermitteln des Füllzustands oder Detektieren der Menge eines Mediums, z.B. einer Flüssigkeitsmenge, in mehreren eng benachbarten Behältern bereitzustellen. Die Vorrichtung, respektive das Verfahren soll jederzeit ein sicheres und genaues Ergebnis auch beim Messen des Füllzustandes bei einer Gruppe von Behältern liefern. Ausserdem geht es darum, ein entsprechendes Laborgerät bereit zu stellen.

Das Verfahren, respektive die Vorrichtung oder das Laborgerät soll vorzugsweise so ausgelegt sein, dass es keine manuelle Intervention erfordert.

Die Vorrichtung soll möglichst so ausgelegt sein, dass sie als Baustein oder Komponente in andere (Labor-)Geräte integriert oder an diese angebaut werden kann.

Diese Aufgaben werden erfindungsgemäß gelöst durch eine Vorrichtung nach Anspruch 1, durch ein Verfahren nach Anspruch 13 und durch ein Laborgerät nach Anspruch 12.

Die erfindungsgemäße Vorrichtung zeichnet sich durch die kennzeichnenden Merkmale des Anspruchs 1 aus. Das erfindungsgemäße Verfahren zeichnet sich durch die kennzeichnenden Merkmale des Anspruchs 13 aus und das erfindungsgemäße Laborgerät zeichnet sich durch die kennzeichnenden Merkmale des Anspruchs 12 aus.

Die Erfindung basiert auf einer Messung mittels eines kapazitiven Netzes oder Netzwerks mehrerer Elektroden. Bei einigen Ausführungsformen sind die Elektroden als individuelle Elektroden ausgeführt, die nicht mit den Behältern verbunden oder gar in die Behälter integriert sind. Bei anderen Ausführungsformen können die Elektroden fest in oder an den Behältern angeordnet sein. Das kapazitive Netz oder Netzwerk kann in allen Ausführungsformen vorzugsweise vor oder während der Durchführung eines Messverfahrens konfiguriert werden indem z.B. die Beschaltung der Elektroden angepasst wird.

Die Erfindung basiert in allen Ausführungsformen auf dem Prinzip, dass jedes Medium, das zwischen eine Sendeelektrode und eine Empfangselektrode gelangt, das empfangene Signal beeinflusst. Die Stärke der Signalbeeinflussung hängt dabei von der Anzahl der elektrischen Ladungen ab, die in dem Medium angesammelt oder verlagert werden können. Diese Ladungen stammen aus dielektrischen Medien (gebundene Polarisierungsladungen), was z.B. bei destilliertem Wasser oder Kunststoff der Fall ist. Die Ladungen treten bei leitenden Medien in Form von freien Oberflächenladungen auf. Dies ist z.B. bei Salzwasser, Blut, Metall usw. der Fall. Bei einem nichtleitenden Medium ergibt sich eine Kapazitätserhöhung durch die entsprechende dielektrischen Konstante. Dieser Effekt der Kapazitätserhöhung korreliert mit dem Volumen des Mediums zwischen den Elektroden. Bei leitenden Medien hingegen gibt es nur die erwähnten Oberflächenladungen. Hier geht es also um die Geometrie des Mediums (z.B. die Grösse der Gesamtoberfläche) und nicht nur das Volumen. Weiterhin ist zu berücksichtigen, dass leitende Medien oberhalb einer bestimmten Frequenz (Maxwell Frequenz genannt) nichtleitend werden.

Die Erfindung basiert in bevorzugten Ausführungsformen weiterhin auf dem Ansatz, dass mindestens ein Teil der Elektroden durch die Anpassung der Beschaltung wahlweise verschiedene vorgegebene Spannungspotentiale annehmen kann und dass dadurch in dem kapazitiven Netz an Elektroden verschiedene parasitäre Kapazitäten wirkungslos geschaltet werden können.

Die Erfindung basiert auch auf der Erkenntnis, dass bei einer kapazitiven Füllstandsmessung die empfangenen Signale direkt vom Widerstand oder der Kapazität, d.h. der Dielektrizitätskonstante, einer Flüssigkeit und somit auch von der Menge der Flüssigkeit abhängen. Ausserdem spielt hier die geometrische Anordnung der Behälter und Elektroden eine Rolle.

Durch die Erfindung ist es möglich, Universalvorrichtungen und Laborgeräte bereit zu stellen, die in den verschiedensten Situationen und unter den verschiedensten Voraussetzungen zuverlässige Detektionsergebnisse liefern.

Die erfindungsgemäße Vorrichtung, das erfindungsgemäße Laborgerät und das erfindungsgemäße Verfahren werden nun an Hand von schematischen, den Umfang der Erfindung nicht beschränkenden Zeichnungen von beispielhaften Ausführungsformen im Detail erläutert.
- Fig. 1: zeigt eine schematische Seitenansicht eines Teils eines Laborgeräts gemäß Stand der Technik;
- Fig. 2A: zeigt eine schematische Draufsicht eines einzelnen Behälters mit zwei diametral gegenüber stehenden Elektroden, gemäß Erfindung;
- Fig. 2B: zeigt eine schematische Draufsicht einer linearen Gruppe von zwei Behältern mit drei Elektroden, gemäß Erfindung;
- Fig. 2C: zeigt eine schematische Draufsicht einer linearen Gruppe von drei Behältern mit vier Elektroden, gemäß Erfindung;
- Fig. 2D: zeigt eine schematische Draufsicht einer flächigen Gruppe von vier Behältern mit fünf Elektroden, gemäß Erfindung;
- Fig. 2E: zeigt eine schematische Draufsicht einer flächigen Gruppe von neun Behältern mit acht Elektroden, gemäß Erfindung;
- Fig. 3: zeigt eine schematische Draufsicht einer weiteren flächigen Gruppe von sieben Behältern mit zehn Elektroden, gemäß Erfindung;
- Fig. 4A: zeigt eine schematische Seitenansicht einer ersten Elektrode, gemäß Erfindung;
- Fig. 4B: zeigt eine schematische Schnittansicht der ersten Elektrode nach Fig. 4A;
- Fig. 5A: zeigt eine schematische Seitenansicht einer zweiten Elektrode, gemäß Erfindung;
- Fig. 5B: zeigt eine schematische Schnittansicht der zweiten Elektrode nach Fig. 5A;
- Fig. 6A: zeigt eine schematische Seitenansicht einer dritten Elektrode, gemäß Erfindung;
- Fig. 6B: zeigt eine schematische Schnittansicht der dritten Elektrode nach Fig. 6A;
- Fig. 7A: zeigt eine schematische Schnittansicht einer weiteren Elektrode;
- Fig. 7B: zeigt eine schematische Schnittansicht einer weiteren Elektrode;
- Fig. 7C: zeigt eine schematische Schnittansicht einer weiteren Elektrode;
- Fig. 8: zeigt eine schematische Schnittansicht durch eine weitere Elektrode samt Bodenplatte, gemäß Erfindung;
- Fig. 9: zeigt eine schematische Schnittansicht durch eine Bodenplatte mit integrierter Elektrode, gemäß Erfindung;
- Fig. 10: zeigt eine schematische Seitenansicht einer Bodenplatte mit drei Elektroden und einer Gruppe von zwei Behältern sowie mit elektrischer Beschaltung, gemäß Erfindung;
- Fig. 11: zeigt eine schematische Seitenansicht einer Bodenplatte mit drei Elektroden und einer Gruppe von drei Behältern, gemäß Erfindung;
- Fig. 12: zeigt eine schematische Draufsicht eines Behälters nach Fig. 2A samt elektrischer Beschaltung, gemäß Erfindung;
- Fig. 13: zeigt eine schematische Draufsicht einer Gruppe mit acht Elektroden, neun Behältern und mit einer elektrischen Beschaltung, gemäß Erfindung;
- Fig. 14: zeigt ein schematisches Ersatzschaltbild einer Gruppe mit vier Elektroden, fünf Behältern und mit einer elektrischen Beschaltung, gemäß Erfindung;
- Fig. 15: zeigt ein schematisches Ersatzschaltbild einer bevorzugten Ausführungsform, gemäß Erfindung;
- Fig. 16A: zeigt eine schematische Draufsicht einer Gruppe mit 117 Elektroden und 8 x 12 Behältern, gemäß Erfindung;
- Fig. 16B: zeigt eine schematische Draufsicht einer Gruppe mit 59 Elektroden und 8 x 12 Behältern, gemäß Erfindung;
- Fig. 17A: zeigt eine Draufsicht einer Gruppe mit 8 x 12 Behältern und einer Bodenplatte mit Elektroden, gemäß Erfindung;
- Fig. 17B: zeigt eine Schnittansicht der Gruppe nach Fig. 17A;
- Fig. 18: zeigt eine Draufsicht einer Gruppe mit 4 x 5 Behältern und einer Anordnung von Elektroden, gemäß Erfindung;
- Fig. 19: zeigt eine Draufsicht einer Gruppe mit 4 x 5 Behältern und einer weiteren Anordnung von Elektroden, gemäß Erfindung;
- Fig. 20: zeigt eine Draufsicht einer Gruppe mit 4 x 5 Behältern und einer weiteren Anordnung von Elektroden, gemäß Erfindung.

Im Folgenden werden vorteilhafte Ausführungsformen der Erfindung beschrieben, wobei es sich um beispielhafte Ausführungsformen handelt. Diese umfassen sowohl verschiedene Ausbildungen der Gesamterfindung, als auch Baugruppen und Einzelteile der Erfindung. Grundsätzlich lassen sich die beschriebenen Baugruppen und Einzelteile der verschiedenen Ausführungsformen miteinander kombinieren, respektive die Baugruppen und Einzelteile einzelner Ausführungsformen lassen sich durch die Baugruppen und Einzelteile anderer Ausführungsformen ersetzen. Die hierbei gebildeten Kombinationen können kleinere, jedem Fachmann geläufige und daher nicht weiter beschriebene Anpassungen bedingen, zum Beispiel um ein Zusammenwirken oder Ineinandergreifen der Baugruppen und Einzelteile zu ermöglichen.

Im Folgenden wird auf mehrere Bauelemente oder Komponenten gesamthaft verwiesen, indem das entsprechende Bezugszeichen ohne Index oder Zusatz verwendet wird. Die Elektroden werden z.B. gesamthaft mit dem Bezugszeichen 201 bezeichnet. Einzelne Elektroden hingegen werden mit 201.1 bis 201.K bezeichnet (K ist hier eine ganze Zahl grösser gleich 3). Die anderen Bezugszeichen werden analog verwendet.

Im Zusammenhang mit der vorliegenden Erfindung ist verschiedentlich von Laborgeräten 400 die Rede. Es handelt sich um Geräte, Systeme, Anlagen, Apparate, Handhabungszentren (auch als "work Station" oder "liquid handling platform" bezeichnet und beispielsweise unter dem Handelsnamen Freedom EVO® von Tecan Trading AG erhältlich) und dergleichen, die z.B. mit Mitteln zur Flüssigkeitsdetektion ausgestattet sind. Die erfindungsgemässe Vorrichtung 100 ist ein Element, eine Baugruppe oder eine Komponente eines solchen Laborgeräts 400. Ein Laborgerät 400 kann zum Beispiel mehrere identische Vorrichtungen 100 oder mehrere verschiedene Vorrichtungen 100 umfassen. Die erfindungsgemässen Vorrichtungen 100 können aber nicht nur zum Detektieren von Flüssigkeiten sondern auch zum Detektieren von anderen Medien (z.B. Pulver, Granulat, Flocken oder dergleichen) eingesetzt werden.

Der Begriff Modul wird hier verwendet, um eine Funktionsgruppe zu umschreiben, die in Hardware, Software oder als Kombination aus Hard- und Software realisiert ist.

Der Begriff "Gruppe" 10 wird hier verwendet, um eine regelmässige Anordnung mehrerer, gleicher oder gleichartiger Behälter 5 zu beschreiben. Die Behälter 5 sind in regelmässiger Anordnung horizontal fest nebeneinander angeordnet, d.h. die Behälter 5 sind gleichmässig über eine Ebene verteilt angeordnet. Die Behälter 5 haben erfindungsgemäß alle die gleiche Form und Grösse und stehen aufrecht. Vorzugsweise sind die Behälter 5 einer Gruppe 10 in einem Gitternetz angeordnet, das mehrere Reihen R und Spalten Sp aufweist. In den Schnittbereichen der Reihen R und Spalten Sp ergeben sich Leerstellen (Arbeitszonen genannt), die bei einem vollbesetzten Gitter alle mit jeweils einem Behälter 5 besetzt sind. Es sind aber auch Gruppen möglich, bei denen nicht alle Leerstellen besetzt sind.

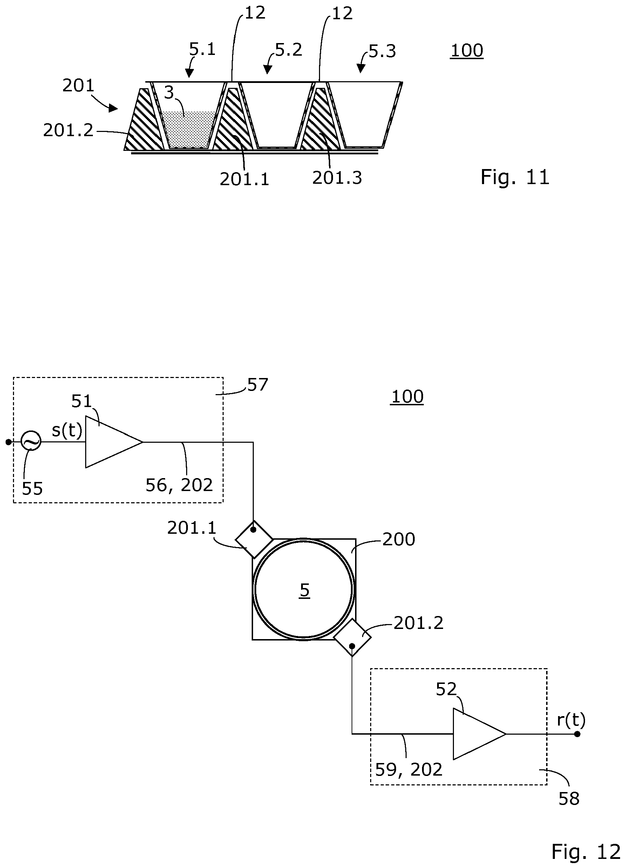

Das Gitternetz definiert gleichzeitig die Arbeitszonen. Bei diesen Arbeitszonen handelt es sich im Sinne der Erfindung um Zwischenräume jeweils zwischen einer als Sender S dienenden Elektrode 201 und einer beabstandeten (Nachbar-)Elektrode 201, die als Empfänger dient. Je nach Ausführungsform der Elektroden 201 hat die Arbeitszone einen kreisförmigen Querschnitt (bezogen auf eine durch die Bodenplatte 200 definierte Horizontalebene E), der in etwa dem Aussenquerschnitt der Behälter 5 entspricht. Die dreidimensionale Form der Arbeitszonen kann zum Beispiel eine Zylinderform haben, oder es kann sich um die Form eines Kegels oder Kegelstumpfs handeln (z.B. bei der Ausführungsform nach Fig. 11). In einem bevorzugten Fall entspricht die Form der Arbeitszonen der Aussenform (Hüllform) der Behälter 5.

Bei den Figuren 2A - 2E, 3, 12, 13, 14, 15, 17A, 17B, 18, 19A, 20, 21 und 22 liegt die Horizontalebene E in der Zeichenebene.

Fig. 2A zeigt einen Grundbaustein 20 einer erfindungsgemässen Gruppe 10. In Fig. 2A ist ein Gitter mit einer Reihe R.1 (R=1) und einer Spalte Sp.1 (Sp=1) gezeigt, das nur eine einzige Leerstelle definiert. An dieser einen Leerstelle befindet sich ein einziger Behälter 5. Es sind hier zwei pfeilerartige Elektroden 201.1, 201.2 gezeigt, die einander diametral gegenüber stehen. Eine erste Elektrode 201.1 befindet sich oben links und eine zweite Elektrode 201.2 unten rechts.

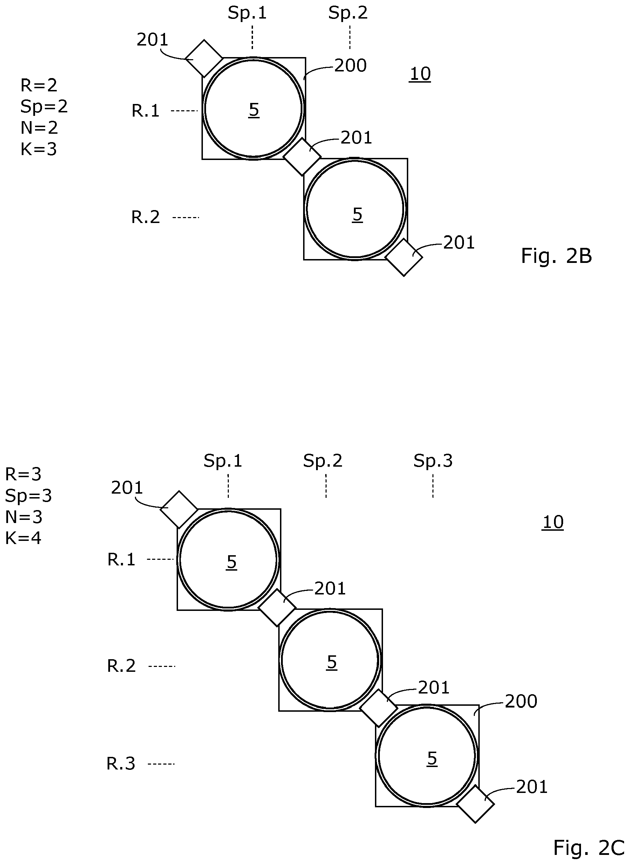

In den Figuren 2B bis 2E sind mehrere Beispiele von erfindungsgemässen Gruppen 10 gezeigt, die jeweils pfeilerartige Elektroden 201 umfassen. Die Elektroden 201 können aber auch eine andere Form aufweisen, wie weiter unten beschrieben wird.

Folgende Nomenklatur wird nun für die Darstellung und Beschreibung der Gruppen 10 verwendet: R gibt die Anzahl der Reihen an; Sp gibt die Anzahl der Spalten an, wobei hier von einem Gitter mit Spalten und Reihen ausgegangen wird, die senkrecht zueinander stehen und deren Spaltenweite (Spaltenabstand AS genannt) und Reihenhöhe (Reihenabstand AR genannt) vorzugsweise identisch sind. Als Leerstellen ergeben sich bei AS = AR somit Quadrate. N gibt die Gesamtzahl der Behälter 5 und K die Gesamtzahl der Elektroden 201 an. Die einzelnen Spalten werden wie folgt unterschieden: Sp.1 definiert die 1. Spalte, Sp.2 definiert die 2. Spalte usw. Die einzelnen Reihen werden wie folgt unterschieden: R.1 definiert die 1. Reihe, R.2 definiert die 2. Reihe usw.

In Fig. 2B ist eine erste lineare Gruppe 10 gezeigt, die wie folgt definiert ist: R=2, Sp=2, N=2, K=3. Es handelt sich also um eine Gruppe 10, bei der nicht alle Leerstellen besetzt sind.

In Fig. 2C ist eine zweite lineare Gruppe 10 gezeigt, die wie folgt definiert ist: R=3, Sp=3, N=3, K=4. Es handelt sich also um eine weitere Gruppe, bei der nicht alle Leerstellen besetzt sind.

Aus der folgenden Tabelle 1 können beispielhafte Zahlenwerte auch für grössere lineare Gruppen 10 entnommen werden. Es wird hier zwischen aktiven und passiven Elektroden 201 unterschieden. Eine aktive Elektrode dient als Sender (S) und/oder Empfänger (R) und/oder virtuelle Masse. Passive Elektroden sind geerdet, d.h. sie liegen auf Massepotential.

**Tabelle 1: lineare Gruppen 10**

| Anzahl Behälter (N) | Gesamtzahl aktiver Elektroden 201 | Anzahl aktiver Elektroden 201 pro Behälter 5 |
|---|---|---|
| 2 | 3 | 1,5 |
| 3 | 4 | 1,33 |
| 4 | 5 | 1,25 |
| 5 | 6 | 1,2 |

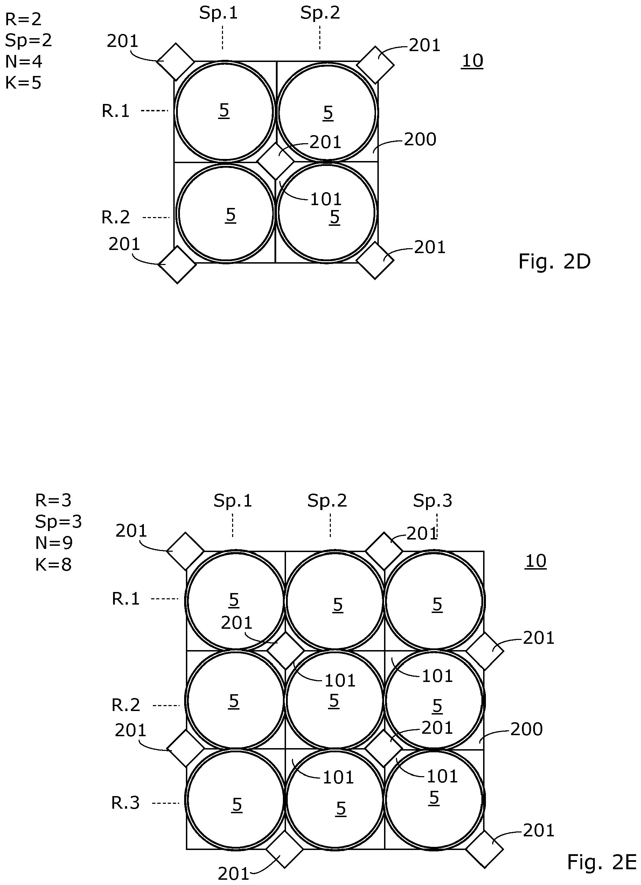

In den Figuren 2D und 2E sind zwei sogenannte flächige Gruppen 10 dargestellt.

In Fig. 2D ist eine erste flächige Gruppe 10 gezeigt, die wie folgt definiert ist: R=2, Sp=2, N=4, K=5. Es handelt sich also um eine Gruppe 10, bei der alle vier Leerstellen besetzt sind. Diese Art der Gruppe wird daher auch als vollständige flächige Gruppe 10 bezeichnet. Bei dieser Gruppe 10 nach Fig. 2D kann man auch mit nur K=4 Elektroden auskommen, wenn man am äusseren Umfang die Elektroden nicht an den Ecken anordnet, sondern mittig.

In Fig. 2E ist eine zweite vollständige flächige Gruppe 10 gezeigt, die wie folgt definiert ist: R=3, Sp=3, N=9, K=8. Es handelt sich also auch um eine Gruppe 10, bei der alle Leerstellen besetzt sind.

Aus der folgenden Tabelle 2 können Zahlenwerte für grössere flächige Gruppen 10 entnommen werden. Je nach Anordnung der Elektroden am äusseren Umfang der Gruppe kann sich ein Unterschied von einer Elektrode bei der Gesamtzahl der erforderlichen Elektroden ergeben. Das Einsparen einer weiteren Elektrode ergibt sich aber nur bei Gruppen mit einer geraden Anzahl Zeilen und Spalten von vollbesetzten Gruppen 10. Dies ist beispielhaft bei einer 4-er, 64-er, 96-er und 348-er Gruppe 10 gezeigt.

**Tabelle 2: flächige Gruppen 10 ohne Leerstellen**

| Anzahl Behälter (N) | Gesamtzahl aktiver Elektroden 201 (K) | Anzahl aktiver Elektroden 201 pro Behälter 5 |
|---|---|---|
| 4 | 4 oder 5 | 1 oder 1,25 |
| 9 | 8 | 0,88 |
| 12 | 10 | 0,833 |
| 20 | 15 | 0,75 |
| 64 | 40 oder 41 | 0,625 oder 0,641 |
| 96 | 117 | 1,22 |
| 96 | 58 oder 59 | 0.6042 oder 0,61458 |
| 99 | 68 | 0,687 |
| 132 | 85 | 0,644 |
| 384 | 212 oder 213 | 0,609 oder 0,612 |

Anhand der Tabellen 1 und 2 und der beispielhaften Figuren ist offensichtlich, dass eine grosse Zahl verschiedener Permutationen möglich ist. Für praktische Anwendungen wird man stets bemüht sein, die Anzahl K der erforderlichen Elektroden 201 möglichst klein zu halten, ohne dass die gesamte Vorrichtung 100 an Flexibilität einbüssen würde. Es können natürlich so viele Elektroden 201 vorgesehen sein, dass an jedem Behälter 5 vier Elektroden 201 z.B. in einem gegenseitigen 90-Grad Winkelabstand vorhanden sind. Die Tabellen 1 und 2 sowie die Ausführungsformen zeigen jedoch, dass man auch mit deutlich weniger Elektroden 201 auskommen kann. Dadurch reduziert sich auch die Anzahl der Verbindungsleitungen 202, die zum Ansteuern oder Abgreifen von Signalen an aktiven Elektroden 201 erforderlich sind.

Besonders bevorzugt ist eine Ausführungsform, bei der man die Anzahl der als Empfänger dienenden Elektroden 201 möglichst klein hält, da die Empfänger teurer/aufwendiger in der Realisierung sind als die als Sender dienenden Elektroden 201.

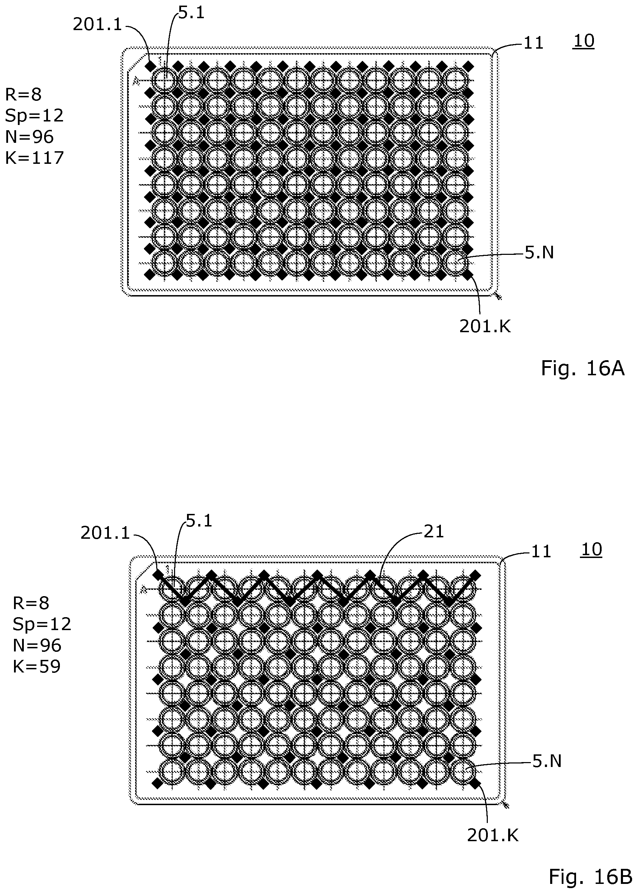

Bei allen Ausführungsformen ist jeweils die Bedingung erfüllt, dass pro Behälter 5 mindestens zwei sich gegenüberstehende aktive Elektroden 201 vorhanden sind. Vorzugsweise stehen sich die Elektroden 201 jeweils bei jedem Behälter 5 diametral gegenüber, weil in diesem Fall die grösstmögliche Symmetrie gegeben ist. Es sind aber auch andere Positionierungen der Elektroden 201 in Bezug zu den jeweiligen Behältern 5 möglich. Ein Teil der Elektroden 201 wird je nach Ausführungsform von benachbarten Behältern 5 geteilt, respektive gemeinsam genutzt. Vorzugsweise sind die Elektroden (siehe z.B. Fig. 16B) entlang eines Zickzack-Pfades oder einer Zickzack-Linie 21 (siehe Fig. 16B) angeordnet.

Der Begriff "gegenüberstehen" wird hier verwendet, um auszudrücken, dass mindestens jeweils zwei Elektroden 201 in Bezug auf einen Behälter 5 oder eine Arbeitszone zur Aufnahme eines Behälters 5 so angeordnet sind, dass ein elektrisches Feld, das von einer der Elektroden 201 ausgesendet wird, mindestens durch einen Teil des Behälters 5 hindurch tritt, bevor das elektrische Feld von einer als Empfänger dienenden Elektrode 201 empfangen wird. Vorzugsweise stehen sich die Elektroden 201 bei allen Ausführungsformen jeweils bei jedem Behälter 5 diametral gegenüber.

Die Erfindung basiert auf einer (Flüssigkeits-)Messung mittels eines kapazitiv gekoppelten Netzes der Elektroden 201. Dieses Prinzip findet bei allen Ausführungsformen Anwendung. Das Netz kann entweder starr, d.h. festverdrahtet, teilweise starr, d.h. teilweise festverdrahtet, oder komplett flexibel bzw. konfigurierbar, d.h. nicht festverdrahtet, ausgeführt sein. Es können z.B. auch kabellose Verbindungen (z.B. IR oder RF-Verbindungen) eingesetzt werden.

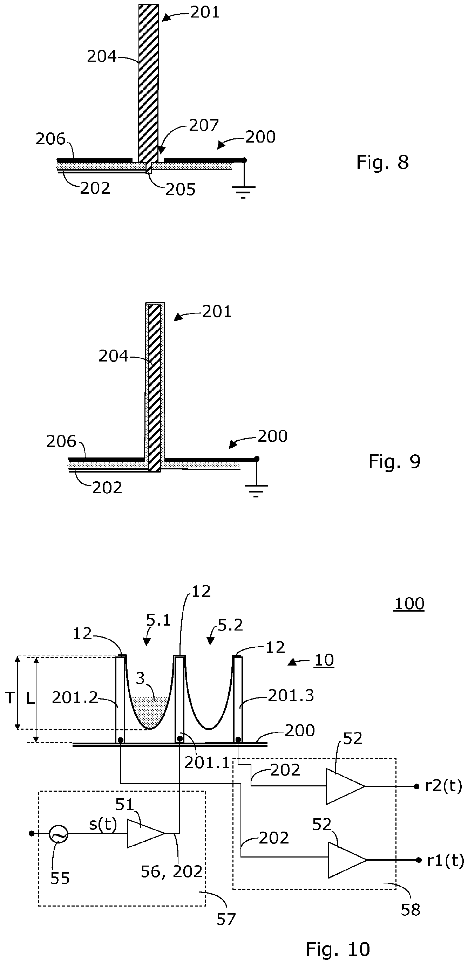

Die erfindungsgemässe Vorrichtung 100 ist speziell zum Detektieren von Flüssigkeit 3 in Behältern 5 ausgelegt, wie in Fig. 10 schematisch dargestellt, kann aber ohne weiteres auch zum Detektieren anderer Medien eingesetzt werden. Zum Zweck des Detektierens umfasst die Vorrichtung 100 eine Gruppe 10 von Behältern 5.1, 5.2 bis 5.N (N ist gemäss Erfindung stets eine ganze Zahl grösser gleich 2), die horizontal in einem regelmäßigen gegenseitigen Abstand nebeneinander in Reihen R und/oder Spalten Sp angeordnet sind. Die Vorrichtung 100 umfasst weiterhin eine horizontale Bodenplatte 200, die parallel unterhalb der Behälter 5 angeordnet ist. Ausserdem umfasst sie Elektroden 201.1, 201.2 bis 201.K (z.B. pfeilerartige Elektroden), die von der Bodenplatte 200 getragen werden, oder die Teil der Bodenplatte 200 sind. Die Elektroden 201 erstrecken sich von der Bodenplatte 200 aus nach oben in Zwischenräume 101 zwischen den Behältern 5 einer Gruppe 10. Es sind mehrere elektrische Verbindungsleitungen 202 vorgesehen, durch die ein Teil der Elektroden 201 individuell selektiv ansteuerbar ist.

Gemäss Erfindung stehen sich bei jedem der Behälter 5 in der Horizontalebene E mindestens je zwei der Elektroden 201.1, 201.2 gegenüber, wie z.B. in der schematischen Draufsicht in Fig. 2A zu erkennen ist. Durch die individuelle selektive Ansteuerung der aktiven Elektroden 201 dient jeweils eine dieser beiden Elektroden 201.1 als Sender (S) und die andere der beiden Elektroden 201.2 als Empfänger (R), wie z.B. in Fig. 12 gezeigt.

Bei einer Mikroplatte (Gruppe 10) mit 96 Behältern 5 ("wells" genannt), sind maximal 96 Sender/Empfänger Paare (d.h. maximal insgesamt 192 Elektroden 201) als Elektroden 201 erforderlich. Um eine Mikroplatte mit 96 Behältern 5 messen zu können, reichen aber auch z.B. 9 x 13 = 117 Elektroden 201. Sehr gute Messergebnisse können aber auch erzielt werden, indem (9 x 13) - 6 = 111 Elektroden 201 für eine solche Gruppe 10 mit 8 x 12 Behältern 5 eingesetzt werden. Die Tabelle 2 zeigt, dass man bei einer Gruppe 10 mit 8 x 12 Behältern 5 sogar mit nur 58 oder 59 Elektroden 201 auskommen kann.

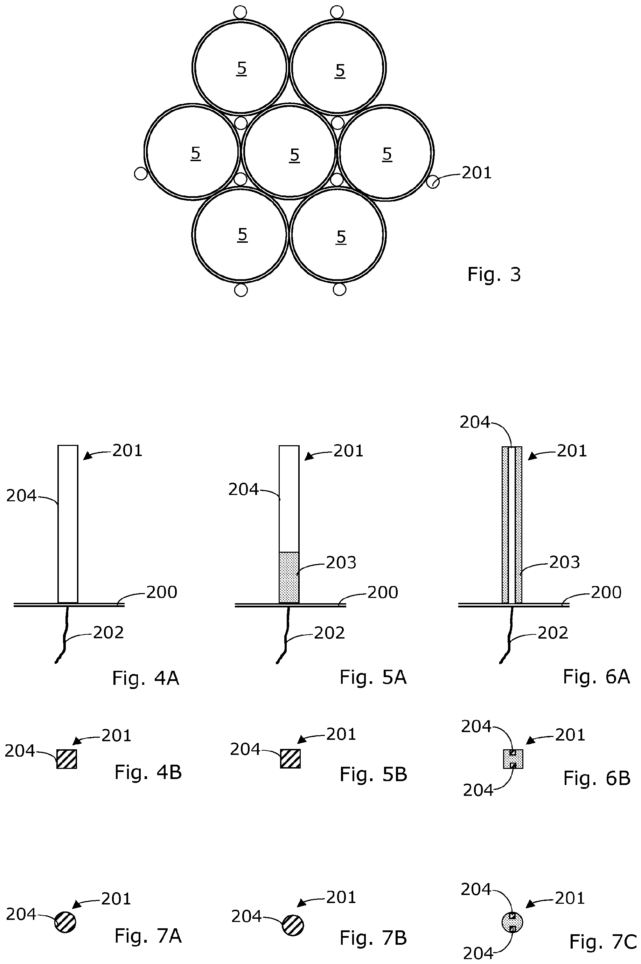

Fig. 3 zeigt eine schematische Draufsicht einer weiteren flächigen Gruppe von sieben Behältern 5 mit zehn Elektroden 201, gemäß Erfindung. Hier sitzen die einzelnen Behälter 5 auf Lücke. Die Elektroden 201 haben hier beispielsweise einen runden Querschnitt.

Der Begriff "pfeilerartige Elektrode" wird speziell für pfosten- oder stabförmige Elemente 201 verwendet. Die Elektroden können allgemeiner aber als vorstehende oder erhabene Elektroden bezeichnet werden, da sie sich von der Bodenplatte 200 aus nach oben erstrecken. Die Elektroden können zum Beispiel eine Kegelform oder eine Kegelstumpfform aufweisen, wie in Fig. 11 zu erkennen. Der Querschnitt der Elektroden 201 kann eine Polygonenform (z.B. eine quadratische Form) haben, oder er kann elliptisch oder kreisrund sein.

Je nach Ausführungsform oder Konstellation lassen sich entweder pfeilerartige Elektroden 201 in die Zwischenräume 101 einfügen (siehe z.B. Fig. 10), oder es lassen sich z.B. kegelstumpfförmige Elektroden 201 in die Zwischenräume 101 einfügen (siehe z.B. Fig. 11).

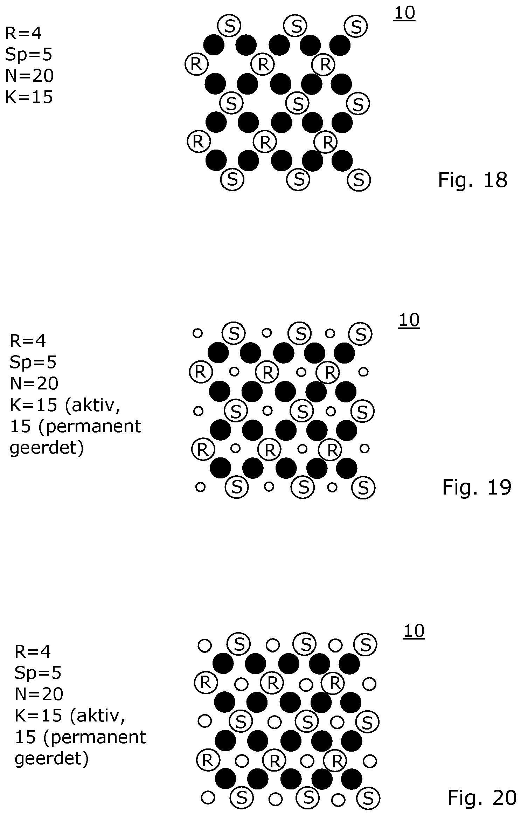

Die Elektroden 201 sind, egal welche Form sie haben, mindestens teilweise elektrisch leitend ausgeführt oder beschichtet. In den Figuren 4A, 4B, 5A, 5B 6A, 6C, 7A - 7C, 8, 9, 10, 11, 12, 13, 14, 15, 17A, 17B, 18 und in den Figuren 19A, 19B und 20 - 22 sind einige mögliche Beispiele von erfindungsgemässen Elektroden 201 gezeigt. Diese Elektroden 201 lassen sich bei allen Ausführungsformen anwenden. Der elektrisch leitende Teil 204 einer solchen Elektrode 201 dient als Abstrahl- und/oder Empfangsfläche, je nach Einsatz der Elektrode 201 als Sender (S) oder Empfänger (R) .

Die Elektroden 201 stehen vorzugsweise senkrecht zu der horizontalen Bodenplatte 200. Die Elektroden 201 können aber auch schräg stehen, um zum Beispiel dem Verlauf der Aussenwand eines Behälters 5 zu folgen.

Die Elektroden 201 haben vorzugsweise eine Länge L (senkrecht zur Bodenplatte 200 gemessen), die in etwa der Tiefe T der Behälter 5 entspricht, wie z.B. in Fig. 10 angedeutet. Vorzugsweise ist die Länge L etwas grösser als die Tiefe T. In Fig. 11 sind Elektroden 201 gezeigt, die etwas weniger lang sind als die Tiefe T.

In besonders bevorzugten Ausführungsformen sitzt eine Mikroplatte, welche die Gruppe 10 der Behälter 5 umfasst, oben auf den Oberseiten der Elektroden 201 auf. In Fig. 10 ist ein Ausschnitt einer Mikroplatte mit zwei Behältern 5.1, 5.2 zu erkennen, die an der Oberseite z.B. durch Stege 12, Verbindungen oder Flächen miteinander verbunden sind. Im Bereich dieser Stege 12, Verbindungen oder Flächen liegt die Mikroplatte auf den Elektroden 201 auf.

Fig. 4A zeigt schematische Details einer pfeilerartigen Elektrode 201 in einer Seitenansicht. Unterhalb der Bodenplatte 200 ist hier eine elektrische Verbindungsleitung 202 in Form eines Kabels gezeigt. Fig. 4B zeigt einen Querschnitt (parallel zu der horizontalen Bodenplatte 200) durch die pfeilerartige Elektrode 201 von Fig. 4A. Die pfeilerartige Elektrode 201 hat hier einen quadratischen Querschnitt.

Fig. 5A zeigt schematische Details einer pfeilerartigen Elektrode 201 in einer Seitenansicht. Hier ist nur der obere Bereich der Elektrode 201 als leitender Bereich 204 ausgelegt. Unterhalb der Bodenplatte 200 ist eine elektrische Verbindungsleitung 202 in Form eines Kabels gezeigt. Fig. 5B zeigt einen Querschnitt (parallel zu der horizontalen Bodenplatte 200) durch den leitenden Bereich 204 der pfeilerartigen Elektrode 201 von Fig. 5A. Der leitende Bereich 204 ist hier, wie auch in Fig. 4B massiv ausgebildet. Die pfeilerartige Elektrode 201 hat hier einen quadratischen Querschnitt. Statt elektrischer Verbindungsleitungen 202 können z.B. auch kabellose Verbindungen (z.B. IR oder RF-Verbindungen) eingesetzt werden.

Fig. 6A zeigt schematische Details einer pfeilerartigen Elektrode 201 in einer Seitenansicht. Hier sind nur zwei (oder mehr) streifenförmige Bereiche der Elektrode 201 als leitende Bereiche 204 ausgelegt. Unterhalb der Bodenplatte 200 ist eine elektrische Verbindungsleitung 202 in Form eines Kabels gezeigt. Fig. 6B zeigt einen Querschnitt (parallel zu der horizontalen Bodenplatte 200) durch die pfeilerartige Elektrode 201 von Fig. 6A. Die leitenden Bereiche 204 sind hier in die pfeilerartige Elektrode 201 eingelassen. Die pfeilerartige Elektrode 201 hat hier insgesamt einen quadratischen Querschnitt.

Die leitenden Bereiche 204 können bei allen Ausführungsformen aber auch in Form einer metallisierten Schicht (z.B. als aussenliegende Schicht aufgedampft oder aufgesputtert) ausgeführt sein.

In den Figuren 7A bis 7C sind die Querschnitte ähnlicher Elektroden 201 gezeigt, wobei die Querschnitte jeweils rund sind. Im Zusammenhang mit Fig. 7A ist auf die Beschreibung der Figuren 4A, 4B verwiesen. Im Zusammenhang mit Fig. 7B ist auf die Beschreibung der Figuren 5A, 5B verwiesen. Im Zusammenhang mit Fig. 7C ist auf die Beschreibung der Figuren 6A, 6B verwiesen.

Die Elektroden 201 können ein integraler Bestandteil der Bodenplatte 200 sein, wie z.B. in Fig. 9 angedeutet. Fig. 9 zeigt eine schematische Schnittdarstellung. Die Bodenplatte 200 zusammen mit den Pfosten oder mit einem Kegelstumpf nach Fig. 11 ist z.B. aus einem Kunststoffmaterial geformt. Im Inneren des Pfostens oder des Kegelstumpfs kann ein elektrisch leitender Kern vorgesehen sein, der als leitender Bereich 204 der Elektrode 201 dient. Der elektrisch leitende Kern erstreckt sich hier bis auf die Rückseite (Unterseite) der Bodenplatte 200 und ist dort mit einer elektrischen Verbindungsleitung 202 in Form einer Leiterbahn verbunden. Der elektrisch leitende Kern ist hier quasi gekapselt. Diese Kapselung hilft Kurzschlüsse bei unsachgemässer Handhabung zu verhindern. So treten zum Beispiel selbst dann keine Kurzschlüsse der empfindlichen Sender S oder Empfänger R auf, wenn versehentlich eine leitfähige Flüssigkeit 3 mehrere Pfosten benetzen sollte, oder wenn mit einem metallischen Gegenstand versehentlich ein Kontakt zwischen zwei Pfosten hergestellt wird.

Bei einer anderen Ausführungsform, die hier nicht gezeigt ist, sind die Pfosten wiederum ein integraler Bestandteil der Bodenplatte 200. In diesem Fall sind jedoch die leitenden Bereiche 204 auf die Oberfläche der Pfosten aufgebracht (z.B. aufgedampft oder aufgesputtert). Diese Ausführungsform lässt sich auch auf Elektroden nach Fig. 11 anwenden.

Die Elektroden 201 können aber auch als individuelle Komponenten angefertigt und mit der Bodenplatte 200 verbunden werden, wie z.B. in Fig. 8 gezeigt. Vorzugsweise werden die Elektroden 201 mit der Bodenplatte 200 verschraubt und/oder verlötet. Durch das Verlöten kann z.B. auch eine Verbindung zu der elektrischen Verbindungsleitung 202 hergestellt werden.

Die elektrische Verbindungsleitung 202 kann auch in die Bodenplatte 200 integriert oder in Form von Leiterbahnen auf der Ober- bzw. Unterseite der Bodenplatte 200 angeordnet sein.

Die Bodenplatte 200 kann aus einem nichtleitenden Material gefertigt und mit der elektrisch leitenden Fläche 206 versehen sein, wie z.B. in Fig. 8 angedeutet. Die Bodenplatte 200 kann aber auch ein Metall umfassen oder aus einem Metall bestehen.

Vorzugsweise ist die Bodenplatte 200 geerdet, d.h. sie befindet sich auf Massepotential. In diesem Fall weist die Bodenplatte 200 eine elektrisch leitende Fläche 206 auf, die auf Massepotential gelegt ist. Ein Ausschnitt einer entsprechenden Ausführungsform ist in Fig. 8 gezeigt. Anhand dieser schematischen Schnittdarstellung ist zu erkennen, dass die Elektrode 201 einen unteren Zapfen 205 aufweist, der elektrisch leitend ist und der sich durch ein Durchgangsloch 207 der Bodenplatte 200 hindurch zur deren Unterseite erstreckt. Auf der Unterseite der Bodenplatte 200 ist eine elektrische Verbindungsleitung 202 in Form einer Leiterbahn vorgesehen, die leitend mit dem Zapfen 205 verbunden ist. Die elektrisch leitende Fläche 206 weist hier im Bereich des Durchgangslochs 207 eine Öffnung auf, damit kein Kurzschluss zwischen der Elektrode 201 und der elektrisch leitenden Fläche 206 entsteht. Ein solcher Kurzschluss ist bei aktiven Elektroden 201, die als Sender (S) und oder Empfänger (R) eingesetzt werden, zu vermeiden. Passive Elektroden 201 sind hingegen bewusst geerdet. Diese Art der Anordnung ist bevorzugt.

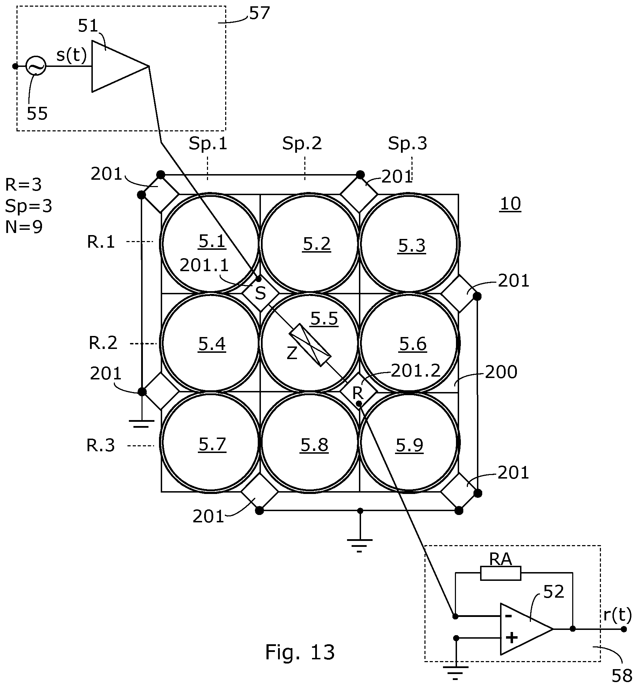

Vorzugsweise sind mindestens im Moment einer (Füllstands-) Messung alle Elektroden 201 geerdet, die im Moment nicht als aktive Elektroden 201 gebraucht werden, so dass nur jeweils eine Sendelektrode S und eine Empfangselektrode R aktiv sind. Diese Prinzip ist in Fig. 13 schematisch angedeutet. Die Elektrode 201.1 dient im gezeigten Moment als Sender S und die Elektrode 201.2 als Empfänger R. Alle anderen Elektroden 201 sind momentan oder permanent geerdet. Es ergibt sich faktisch eine komplexe Impedanz Z zwischen den beiden aktiven Elektroden 201.1 und 201.2. Die komplexe Impedanz Z ist in Fig. 13 schematisch angedeutet. Die Elektrode 201.2 liegt virtuell an Masse und ist daher komplett oder im Wesentlichen spannungsfrei.

Rein mathematisch betrachtet, kann die gesamte Gruppe 10 z.B. durch eine Matrix aus mehreren komplexen Impedanzwerten beschrieben werden. Bei jeder Messung, die jeweils zwischen einem Elektrodenpaar aus Sender S und Empfänger R durchgeführt wird, ergibt sich eine Matrix mit anderen komplexen Impedanzwerten. Die verschiedenen komplexen Impedanzwerte ergeben sich bei jeder Messung durch die Wechselwirkung des Behälters 5.5 respektive des Füllgrades (siehe Momentaufnahme in Fig. 13), der gegenwärtig vermessen wird, mit den anderen Behältern 5.1, 5.2, 5.3, 5.4, 5.6, 5.7, 5.8 und 5.9 und Elektroden 201.

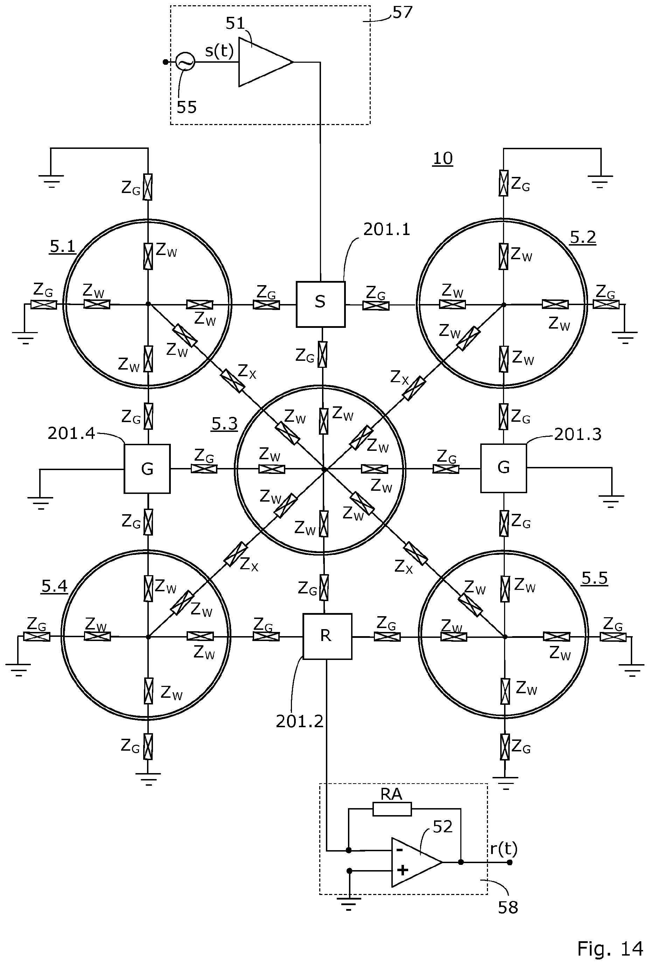

In Fig. 14 ist ein entsprechendes Netzwerk aus komplexen Impedanzen gezeigt. Dabei kommt das folgende Impedanzmodell für die Elektrodenanordnung zur Anwendung. Zwischen den Behältern 5.N und den Elektroden 201.K liegen die komplexen Impedanzen, die hier auch als Koppelimpedanzen bezeichnet werden. Zum Zwecke der Vereinfachung sind die komplexen Impedanzen in Fig. 14 als diskrete Impedanzelemente (gekreuzte Widerstandssymbole) zusammengefasst. Innerhalb der Behälter 5.N liegen die Behälterimpedanzen Z_{W}, die sich je aus einer Behälterkapazität C_{W} und einem Behälterwiderstand R_{W} zusammen setzen. Um acht Richtungen in der Horizontalebene E (Zeichenebene) unterscheiden zu können, wird die verteilte Gesamtimpedanz jedes Behälters 5.N in acht Teilimpedanzen aufgeteilt, die im Zentrum der rotationssymmetrischen Behälter 5.N auf einen gemeinsamen Knoten führen. Bei schlecht leitenden Flüssigkeiten 3 oder Medien in den Behältern 5.N können die Parallelwiderstände (Behälterwiderstand R_{W}) vernachlässigt werden. Zwischen jedem Behälter 5.N (hier der Behälter 5.3) und seinen vier Nachbarelektroden 201 (hier die Elektroden 201.1, 201.2, 201.3, 201.4) treten vier Masse-Impedanzen Z_{G} auf, die im Wesentlichen je aus einer Kapazität C_{G} bestehen. Zwischen benachbarten Behältern 5.N (hier z.B. zwischen dem Behälter 5.3 und 5.1) tritt je eine direkte Übersprech-Impedanz Z_{X} auf, die als Kapazität C_{X} dargestellt werden kann.

Die aktuellen Impedanzen Z, respektive die Kapazitäten C, werden jeweils zwischen einer momentan als Sender S dienenden Elektrode 201 (hier die Elektrode 201.1) und der gegenüber stehenden Empfangselektrode 201 (hier die Elektrode 201.2) ermittelt.

Anhand der Abbildung von Fig. 14 ist zu erkennen, dass das Netzwerk aus Impedanzen Z eine deutliche geometrische und schaltungstechnische Symmetrie aufweist. Aufgrund der Symmetrie überlagern sich Übersprecheinflüsse teilweise so, dass sie sich kompensieren, vorzugsweise ganz auslöschen, oder dass die Übersprecheinflüsse mathematisch einfacher zu ermitteln sind.

Das macht die mathematischen Berechnungen und die Anwendung entsprechender Algorithmen zum rechnerischen "Ausblenden" (im Sinne von Kompensation) des Übersprechens einfacher.

Die jeweilige geometrische Anordnung und Beschaltung der einzelnen Elektroden 201, kann so gewählt werden, dass das Übersprechen bereits durch die Anordnung und Beschaltung ganz oder weitestgehend durch Feldüberlagerung reduziert oder eliminiert ist. Diese Aussage gilt zumindest für Behälter 5, die im inneren Bereich einer Gruppe 10 liegen. Randständige Behälter 5 haben ein leicht asymmetrisches Umfeld, was zur Folge haben kann, dass hier das Übersprechen deutlicher auftritt.

Untersuchungen und Simulationen haben ergeben, dass durch das Erden passiver Elektroden 201 das Übersprechen auf einige wenige Prozent reduziert werden kann. Je nach Gruppe 10 können bis zu 50% aller Elektroden 201 permanent oder zeitweise geerdet werden. D.h. nur ca. 50% der Elektroden 201 müssen als aktive Elektroden 201 ausgelegt sein. Der schaltungstechnische Aufwand reduziert sich dadurch erheblich.

Die Bodenplatte 200 kann eine durchgängige Platte sein, deren Grösse in etwa der Flächenausdehnung der Gruppe 10 oder des Gitters der Gruppe 10 entspricht. Die Bodenplatte 200 kann aber auch aus mehreren Elementen, z.B. einzelnen Streifen, zusammengesetzt sein. Vorzugsweise ist die Bodenplatte 200 so ausgelegt, dass sie als elektrische Erdung oder Abschirmung wirkt. Eine solche Erdung oder Abschirmung kann auch dann erreicht werden, wenn die Bodenplatten 200 nicht einstückig ist.

Vorzugsweise kommen bei allen Ausführungsformen passive oder aktive getriebene Abschirmungen zum Einsatz. Die Abschirmungen sind hier nicht gezeigt.

Es wurde bereits erwähnt, dass es aktive und passive Elektroden 201 gibt. Die passiven Elektroden 201 sind permanent oder zeitweise geerdet, oder sie befinden sich auf einem anderen vorgegebenen Spannungspotential. Die aktiven Elektroden 201 werden entweder nur als Sender, oder nur als Empfänger oder zeitweise als Sender und zeitweise als Empfänger eingesetzt. Die aktiven Elektroden 201 können je nach Ausführungsform zeitweise auch geerdet werden. Die aktiven Elektroden 201 zeichnen sich dadurch aus, dass sie durch die Sendeschaltung 57 einzeln oder gemeinsam anregbar und/oder durch die Empfangsschaltung 58 einzeln oder gemeinsam auslesbar sind. Jede aktive Sendeelektrode 201 hat eine Verbindungsleitung 202, um sie mindestens temporär mit dem Ausgang 56 einer Sendeschaltung 57 verbinden zu können (siehe z.B. Fig. 10). Jede aktive Empfangselektrode 201 hat eine Verbindungsleitung 202, um sie mindestens temporär mit dem Eingang 59 einer Empfangsschaltung 58 verbinden zu können. Das Schaltungsprinzip ist in Fig. 12 in schematischer Form angedeutet. Es kommt als Teil einer Sendeschaltung 57 ein Sende-Verstärker 51 zu Einsatz, um ein Eingangssignal s(t) eines Generators 55 zu verstärken und an eine Sendeelektroden 201.1. anzulegen. Die diametral gegenüber stehende Elektrode 201.2 dient in diesem Moment als Empfangselektrode und ist zu diesem Zweck mit einem Empfangsverstärker 52 verbunden. Der Empfangsverstärker 52 stellt ein Ausgangssignal r(t) zur Verfügung, das eine Aussage über die Flüssigkeitsmenge oder die Menge des Mediums zulässt, die/das sich momentan in dem Behälter 5 zwischen den beiden Elektroden 201.1, 201.2 befindet.

Gemäss Erfindung werden bevorzugte Ausführungsformen so ausgelegt, dass die Empfangselektroden 201, respektive diejenigen Elektroden 201, die zeitweise als Empfangselektroden 201 dienen, virtuell auf Masse gelegt werden. Dadurch kann das kapazitive Übersprechen zwischen benachbarten Elektroden ganz oder nahezu auf Null gesetzt werden. Es bleibt lediglich ein kleiner Signalanteil, der sich aus einem Übersprechen von Behälter 5 zu Behälter 5 (well-to-well) ergibt.

Vorzugsweise wird ein Teil der Elektroden 201 permanent oder temporär geerdet, wie erwähnt. Dadurch kann eine signifikante Reduktion des Übersprechens erreicht werden. Durch eine vorberechnete geometrische Dimensionierung (wie Grösse, Abstand, Ausrichtung, etc.) und/oder Beschaltung der Elektroden 201 kann das Übersprechen minimiert oder sogar komplett auf Null gesetzt werden. Diese Form der Optimierung/Minimierung ist möglich, da es sich bei den Gruppen 10 um Gruppen 10 mit regelmässig angeordneten Behältern 5 und auch Elektroden 201 handelt, deren gegenseitige Abstände, geometrisch Formen, elektrische Leitfähigkeit und andere Eigenschaften bekannt sind.

Benachbarte Behälter 5 können je nach Situation auch einen negativen Beitrag zum Übersprechen haben. So kann z.B. ein unmittelbar benachbarter Behälter 5.1, der mit Flüssigkeit 3 befüllt ist, ein negatives Übersprechen auf den gegenwärtig zu messenden Behälter 5.2 bewirken (siehe z.B. Fig. 10).

In Fig. 10 ist ein Schnitt durch einen Teil einer Vorrichtung 100 gezeigt. In dieser schematischen Schnittdarstellung sind zwei direkt benachbarte Behälter 5.1 und 5.2 zu erkennen. Eine Elektrode 201.1 sitzt mittig zwischen den beiden Behältern 5.1 und 5.2. Eine weitere Elektrode 201.2 sitzt links und eine andere Elektrode 201.3 sitzt rechts. Im gezeigten Beispiel wird die mittlere Elektrode 201.1 als Sendeelektrode eingesetzt, die z.B. durch einen Sendeverstärker 51 mit einem Eingangssignal s(t) angeregt werden kann. Die beiden Elektroden 201.2 und 201.3 dienen hier im gezeigten Moment als Empfangselektroden. Die Empfangselektrode 201.2 empfängt ein Signal r1(t), das sich von dem Signal r2(t) unterscheidet, das die Empfangselektrode 201.3 empfängt. Die Unterschiede zwischen den beiden Signalen r1(t) und r2(t) ergeben sich aus der unterschiedlichen Füllstandssituation. Im Behälter 5.1 befindet sich hier eine kleine Menge an Flüssigkeit 3 oder eines anderen Mediums. Der Behälter 5.2 hingegen ist leer. Falls beide Behälter 5.1 und 5.2 mit der gleichen Flüssigkeit oder dem gleichen Medium gleich befüllt wären, wären die beiden Signale r1(t) und r2(t) aufgrund der Symmetrie identisch.

Die Elektrodenanordnung der Vorrichtung 100 kann entweder mit Hilfe von getakteten elektrischen Signalen (so genannter getakteter Betrieb) oder mit Hilfe von sinusförmigen Signalen (so genannter linearer oder analoger Betrieb) betrieben werden. Die Empfangselektroden 201 empfangen und stellen ein elektrisches Signal r(t) bereit, bei dem es sich hier vorzugsweise um einen Strom handelt, wenn eine der in den Figuren gezeigten Empfangsschaltungen 58 eingesetzt wird. Die Stromstärke stellt ein Mass für die momentan gemessene Kapazität (hier als komplexe Impedanz Z_{ges} bezeichnet) und somit den Füllstand im Behälter 5 dar. Beim linearen Betrieb treten in vorteilhafter Weise keine Oberwellen auf und es können somit im Wesentlichen keine unerwünschten Interferenzen entstehen. Ferner können schmalbandige Filter (nicht gezeigt) in der Empfangsschaltung 58 für die Signalverarbeitung verwendet werden. Dies führt auf einfache Weise zu einer Verbesserung des Signal-Rausch-Verhältnisses und der Empfindlichkeit der Vorrichtung 100 bzw. der Elektrodenanordnung. So können auch deutlich kleinere Änderungen der Kapazität der Elektrodenanordnung festgestellt oder gemessen werden.

Die vorliegende Erfindung bezieht sich insbesondere auf Vorrichtungen 100 zum Messen des Füllstandes, die mit sinusförmigen Signalen im linearer Betrieb betrieben werden.

Vorzugsweise kommt bei den verschiedenen Ausführungsformen ein periodisches Eingangssignal s(t) zum Einsatz. Besonders bevorzugt ist ein sinusförmiges Signal s(t), das eine Frequenz zwischen 100 kHz und 5 MHz hat. Die Sendeschaltung 57 umfasst einen Generator. Falls ein sinusförmiges Signal s(t) eingesetzt wird, so kommt ein Sinusgenerator 55 als Teil der Sendeschaltung 57 zum Einsatz. Ein solcher Sinusgenerator 55 ist z.B. in den Figuren 10, 11 und 13 gezeigt.

Die als Sender S dienende Elektrode 201 ist im Messzeitpunkt nicht auf Masse gelegt, sondern mit einer Signalspannungsquelle (d.h. mit dem Ausgang des entsprechenden Sender-Verstärkers) verbunden. Die als Empfänger R dienende Elektrode 201 hingegen ist auf virtuelle Masse gelegt.

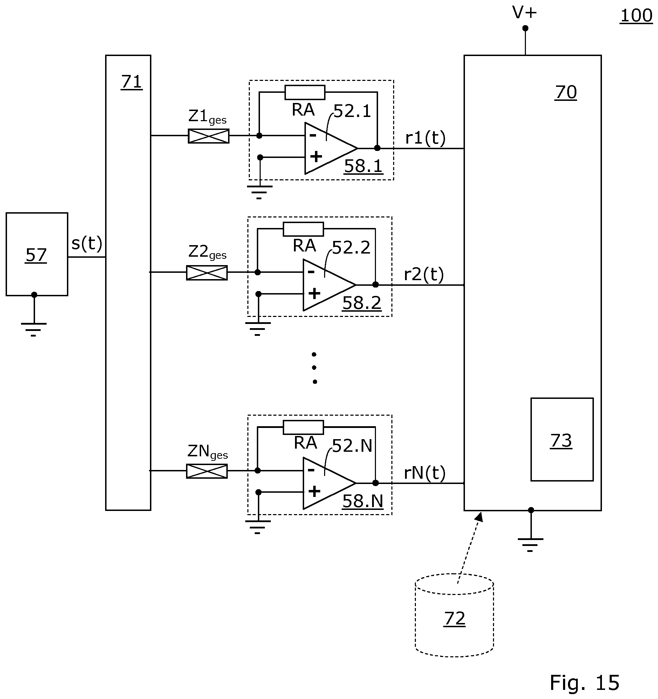

In Fig. 15 ist eine bevorzugte Ausführungsform der Beschaltung der Elektrodenanordnung der Vorrichtung 100 gezeigt. In dieser Ausführungsform kommt eine einzige Senderschaltung 57 zum Einsatz, die ein (sinusförmiges) Eingangssignal s(t) an einen Multiplexer 71 übergibt. Der Multiplexer 71 hat insgesamt N Ausgänge und schaltet das Eingangssignal s(t) Schritt für Schritt auf jeden der N Ausgänge. Wenn N Behälter 5.1 bis 5.N zu vermessen sind, dann wird so das Eingangssignal s(t) nacheinander an jede als Sender S dienende Elektrode 201 angelegt. Die einzelnen komplexen Impedanzen, die jeden Messkanal 1 bis N individuell auszeichnen, sind in Fig. 15 jeweils durch nur ein Impedanzsymbol mit Bezugszeichen Z1_{ges} bis ZN_{ges} dargestellt. In dieser Ausführungsform kommt pro Kanal eine Empfangsschaltung 58.1 bis 58.N zum Einsatz. Jeder der Empfangsschaltungen 58.1 bis 58.N liefert ein Ausgangssignal r1(t) bis rN(t), das eine Aussage zulässt über die momentan gemessene Impedanz Z1_{ges} bis ZN_{ges}. Ausgangsseitig ist ein zentrales Auswertemodul 70 vorhanden, das die Ausgangssignale r1(t) bis rN(t) verarbeitet. Alle aktiven Sendeelektroden (nicht in Fig. 15 gezeigt) sind oder werden zur gegebenen Zeit mit einer Signalspannungsquelle (d.h. mit dem Ausgang des entsprechenden Sender-Verstärkers) verbunden. Die Beschaltung nach Fig. 15 lässt sich auf alle Ausführungsformen anwenden.

Das Netzwerkmodell nach Fig. 14 kann z.B. angewendet werden, um die einzelnen komplexen Impedanzen Z1_{ges} bis ZN_{ges} zu ermitteln. Die bei der Netzwerkmodellbildung zu berücksichtigende Anzahl Impedanzen Z_{G}, Z_{W}, Z_{X} (aus Parasitärkapazitäten und Widerständen) hängt davon ab, wie genau das Modell sein soll. In Fig. 14 wurden nur die unmittelbar benachbarten Elemente mit einbezogen, da die Wirkung, respektive der Einfluss anderer Elemente mit zunehmendem Abstand stark reduziert ist. Es können natürlich auch mehr als nur die unmittelbar benachbarten Elemente mit einbezogen werden.

Übersprechimpedanzen (Übersprechkapazitäten) zwischen räumlich weit entfernt angeordneten Empfangselektroden 201 sind üblicherweise klein im Verhältnis zu den übrigen Impedanzen des Modells und können daher oftmals vernachlässigt werden. In der Regel ist es ausreichend, die Übersprechimpedanzen zur räumlich gesehen nächsten (wie in Fig. 14) und auch zur übernächsten Empfangselektrode im (mathematischen) Modell zu berücksichtigen.

Die parasitären Kapazitäten haben die folgenden, sich negativ auf die Messergebnisse auswirkenden Einflüsse. Die Parallelkapazitäten bilden zusammen mit der zugehörigen Kapazität zwischen Sender S und Empfänger R jeweils einen Spannungsteiler, der zu einer Verringerung des Stromes führt, der in die Empfangselektrode R hinein fliesst und über den Strom-Spannungswandler 58 zu einem verringerten Ausgangssignal r(t) und somit zu einer Reduktion des Signal-Rausch-Verhältnisses und der Messgenauigkeit führt. Die Übersprechkapazitäten Cx stellen Kopplungen zwischen benachbarten Behältern 5.N dar. Die von den Senderelektroden ausgehenden Ströme gelangen daher nicht nur über den zu messenden Behälter zur Empfangselektrode, sondern auch über die benachbarten Behälter, was zur unerwünschten Beeinflussung des Ausgangssignals r(t) durch diese benachbarten Behälter führt. Weil die Kapazitäten Cx vom Füllstand benachbarter Behälter abhängt, ist der empfangene Strom nicht nur vom Füllstand des zu messenden Behälters, sondern auch vom Füllstand der benachbarten Behälter abhängig, was als Übersprechen bezeichnet wird und zu einem räumlichen Auflösungsverlust der Vorrichtung 100 führt.

Da gemäss Erfindung die geometrische Anordnung der einzelnen Elemente (Elektroden 201 und Behälter 5) genau bekannt ist, können mit Hilfe der Finite-Elemente-Methode (FEM) die Impedanzwerte des in Fig. 14 dargestellten Modells berechnet werden. Sind das Modell mit den Impedanzwerten und der Aufbau der Empfangsschaltungen 58.1 - 58.N bekannt, so können die von den Empfangsschaltungen 58.1 - 58.N aufbereiteten Signale r1(t) bis rN(t) entweder analytisch oder mit Hilfe eines Schaltungssimulators berechnet werden. Diese analytische Ermittlung oder die Berechnung kann in dem Auswertemodul 70 erfolgen. Vorzugweise wird mindestens ein Teil dieser Ermittlungen oder die Berechnungen mittels Software ausgeführt.

Vorzugsweise können durch das Auswertemodul 70 die von verschiedenen Empfangsschaltungen 58.1 - 58.N (vor-)verarbeiteten Signale r1(t) bis rN(t) miteinander verglichen werden.

Je nach Ausführungsform kann zusätzlich zu den als Messsensor dienenden Elektrodenpaaren auch ein Referenzsensor vorgesehen sein, um z.B. umgebungsbedingte Störgrössen (Temperatur, Luftfeuchtigkeit, Druck), z.B. durch Differenzbildung, ausblenden zu können. Der senderseitige Signalgenerator 55 versorgt in diesem Fall sowohl den Sender des momentan aktiven Elektrodenpaars und auch den Sender des Referenzsensors. Dieser Ansatz lässt sich auf alle Ausführungsformen anwenden.

Die Ausgangssignale r(t) der Empfangsschaltungen 58 werden z.B. durch ein Auswertemodul 70 gemäss Fig. 15 weiter verarbeitet.

Vorzugsweise arbeiten die Sender bei allen Ausführungsformen bei einer Frequenz, die unterhalb der Maxwell-Frequenz liegt.

Die erfindungsgemässe Vorrichtung 100 ist extrem empfindlich, was es ermöglicht hochgenaue Füllstandsmessungen durchzuführen. Um eine Beeinträchtigung der Messungen zu verhindern, werden vorzugsweise bei allen Ausführungsformen vor dem Durchführen einer Füllstandsmessung elektrisch leitende Elemente (z.B. Pipettiernadeln) aus dem Bereich der Behälter 5 entfernt.

Die erfindungsgemässe Vorrichtung 100 ist vorzugsweise in allen Ausführungsformen mit einem Auswertemodul 70 versehen, das Algorithmen zur Anwendung bringt, um Einflüsse benachbarter Behälter 5 zu minimieren. Vorzugsweise werden dabei sogenannte "Cluster" (im Sinne von Untergruppen) gebildet, um je nach Messsituation und Zustand alle nicht gewünschten Einflüsse "ausblenden" zu können.

Aufgrund der Anordnung der Behälter 5 und/oder Elektroden 201, heben sich gegenseitige störende Einflüsse (Übersprechen), die durch Überlagerung der elektrischen Felder (Wechselfelder) benachbarter Behälter entstehen, teilweise auf. Zusätzlich kann bei Bedarf eine mathematische Kompensation durch den Einsatz entsprechender Algorithmen zum Einsatz kommen, wie beschrieben.

Die entsprechenden Algorithmen ermöglichen eine intelligente Auswertung der Messergebnisse und/oder mathematische Kompensation störender Einflüsse.

In einer bevorzugten Ausführungsform werden die Algorithmen an die jeweilige Situation angepasst. Zu diesem Zweck können z.B. Vergleichs- oder Kalibrationswerte aus einem optionalen Speicher 72 (siehe Fig. 15) ausgelesen werden, der mit dem Auswertemodul 70 verbindbar ist.

Es ist auch möglich die Behälter 5 aller Ausführungsformen mittels einer maschinenlesbaren Codierung zu kennzeichnen, damit die Vorrichtung 100 beim Erkennen eines bestimmten Behälters 5 einen entsprechenden Algorithmus (z.B. aus einem Speicher 72) wählen kann. Ja nach Behälter 5 kann auch ein anderes Messverfahren oder Ansteuerungsschema zur Anwendung kommen.

Als maschinenlesbare Codierung kann z.B. ein Barcode (z.B. ein kapazitiver Barcode), RFID (Radio-frequency identification) oder eine andere Markierung einer Gruppe 10 zum Einsatz kommen.

In einer bevorzugten Ausführungsform wird vor einer Messung ermittelt, ob überhaupt eine Gruppe 10 aufgesetzt wurde und/oder ob die Gruppe 10 richtig platziert wurde, d.h. ob die Elektroden 201 z.B. richtig in den Zwischenräumen 101 sitzen. Diese Schritte lassen sich auf alle Ausführungsformen anwenden.

In einer bevorzugten Ausführungsform wird vor einer Messung oder beim Eichen der Vorrichtung 100 eine sogenannte Nullmessung durchgeführt, um die Einflüsse einer leeren und trockenen Mikroplatte oder Gruppe 10 von Behältern 5 zu erfassen. Die so erfasste Information kann anschliessend bei einer Messung in Abzug gebracht werden. Durch eine solche Nullmessung können z.B. Einflüsse ausgeschlossen werden, die sich durch kleinere Abweichungen von der idealen Bauform ergeben können. Die Ergebnisse der Nullmessung können z.B. in einem optionalen Speicher 72 abgelegt sein. Diese Schritte lassen sich auf alle Ausführungsformen anwenden.

Die Erfindung macht sich bei allen Ausführungsformen zu Nutze, dass ein leerer Behälter 5 eine andere Kapazität aufweist als ein flüssigkeitsgefüllter Behälter 5. Ein leerer Behälter 5 führt zu einer niedrigeren Kapazität zwischen den Senderelektroden S und den Empfängerelektroden R, ein gefüllter Behälter 5 zu einer höheren.

Vorzugsweise kommt als Teil der erfindungsgemässen Vorrichtung 100 ein Verstärker 52 zum Einsatz, der so ausgelegt respektive beschaltet ist, dass Stromwerte ausgewertet werden können, die Spannung am Verstärkereingang 52 aber Null oder nahezu Null ist (virtuelle Erde). Dies kann z.B. durch den Einsatz eines geeignet beschalteten Operationsverstärkers 52 realisiert werden.

Vorzugsweise kommt als Teil der erfindungsgemässen Vorrichtung 100 ein Lock-In Verstärker als Teil der Schaltung 58 zum Einsatz, um die Signale r(t) auszuwerten, die von Empfangselektroden 201 geliefert werden. Durch einen solchen Lock-In Verstärker wird Rauschen auf den Verbindungsleitungen 202 nicht mit verstärkt. Das Rauschen ist somit minimal. Vorzugsweise kommt ein Lock-In Verstärker zum Einsatz, der mit einem Sinussignal betrieben wird.

Vorzugsweise kommt als Teil der erfindungsgemässen Vorrichtung 100 ein Synchrondemodulator oder lock-in-Verstärker zur Amplitudendemodulation zum Einsatz, um die Signale r(t) auszuwerten, die von Empfangselektroden 201 geliefert werden. Durch einen solchen phase-lockedloop können Phasenverschiebungen des Messsignal kompensiert werden.

Um Stromwerte weiter zu verarbeiten, die von dem/den Empfangsverstärkern 52 geliefert werden, kommen vorzugsweise A/D-Wandler im Auswertemodul 70 zum Einsatz. In diesem Fällen ist das zentrale Auswertemodul 70 mit einem A/D-Wandler ausgestattet, der die Signal r1(t) bis rN(t) in digitale Werte umsetzt, wobei in diesem Fall die gesamte Weiterverarbeitung mit digitalen Schaltungen erfolgt.

Je nach Ausführungsform kann pro Empfangselektrode 201 ein dedizierter Empfangsverstärker 52 oder eine ein dedizierte Empfangsschaltung 58 vorgesehen sein. In diesem Fall können Messungen zum Teil parallel durchgeführt werden, wobei hier besonders auf Einflüsse zu achten ist, die sich aufgrund von Übersprechen bei gleichzeitig ablaufenden Messungen ergeben können. Es ist ein Nachteil dieses Ansatzes, dass sehr viele Empfangsverstärker 52 oder Empfangsschaltungen 58 eingesetzt werden müssen.

Statt dessen kann aber auch durch ausgangsseitiges Multiplexen die Anzahl der Empfangsverstärker 52 oder Empfangsschaltungen 58 reduziert werden. Es ist möglich alle Kanäle, d.h. alle Füllstandsmessungen zeitlich hintereinander durchzuführen. In diesem Fall kommen nur eine Senderschaltung 57 und eine Empfängerschaltung 58 zum Einsatz, welche temporär mit den zu aktivierenden Senderelektroden 201 und Empfangselektroden 201 verbunden werden.

Vorzugsweise erfolgt das Ansteuern des Elektrodennetzes aus Elektroden 201 über einen eingangsseitigen Multiplexer 71, wie in Fig. 15 gezeigt.

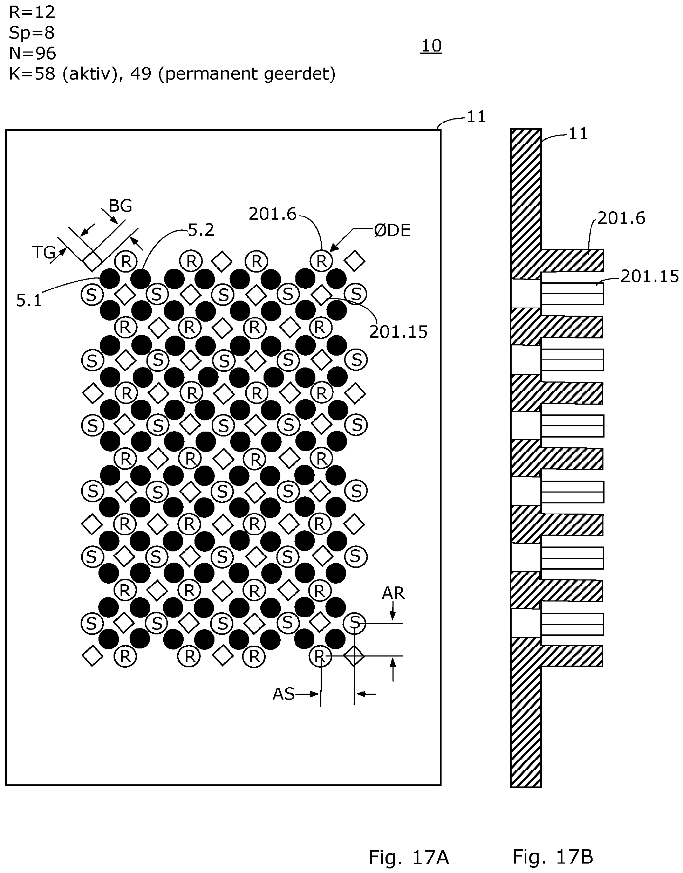

Fig. 16A zeigt eine schematische Draufsicht einer Gruppe mit 9 x 13 Elektroden 201 und 8 x 12 Behältern, gemäß Erfindung. Fig. 16B zeigt eine schematische Draufsicht einer Gruppe mit nur 59 Elektroden 201 und 8 x 12 Behältern, gemäß Erfindung. Der direkte Vergleich der beiden Figuren 17A und 17B zeigt, dass bei Bedarf die Anzahl der Elektroden drastisch reduziert werden kann. In diese Figur ist eine Zickzack-Linie 21 eingezeichnet, um anzudeuten, dass die Elektroden 201 vorzugsweise entlang einer solchen Zickzack-Linie 21 angeordnet sind. Für eine Gruppe 10 nach Fig. 16A oder 16B reichen bei optimaler Anordnung sogar nur 58 Elektroden 210 (siehe Tabelle 2).

Die Gruppe 10 der verschiedenen Ausführungsformen sind vorzugsweise so ausgelegt, dass sie von oben auf die Bodenplatte 200 mit Elektroden 201 gesteckt oder aufgesetzt werden können.

Fig. 17A zeigt eine schematische Draufsicht einer Gruppe mit 58 aktiven Elektroden 201 (hier als weiss gefüllte Kreise gezeigt), 8 x 12 Behältern (hier als schwarz gefüllte Kreise gezeigt) und 49 permanent geerdeten Elektroden (hier als weiss gefüllte Rauten gezeigt), gemäß Erfindung. Fig. 17B zeigt einen Querschnitt durch diese Gruppe 10. Anhand dieses Querschnitts ist zu erkennen, dass hier jeweils eine aktive Elektrode (z.B. die Elektrode 201.6) auf eine geerdete Elektrode (z.B. die Elektrode 201.15) folgt. Die geerdeten Elektroden haben hier einen anderen Querschnitt als die aktive Elektroden. Die geerdeten Elektroden können z.B. einen quadratischen Querschnitt haben, wohingegen die aktive Elektroden z.B. einen kreisförmigen Querschnitt aufweisen. Die Form der Elektroden 201 kann gemäss der anderen Ausführungsformen auch eine andere Gestalt haben. Der quadratische Querschnitt der geerdeten Elektroden hat eine Breite BG und eine Tiefe TG mit TG = BG. Die Breite BG und die Tiefe TG können zwischen 1 und 10 mm betragen. Bei einem Gitter mit gleichmässiger Gitterstruktur ist der Spaltenabstand AS gleich dem Reihenabstand AR. Der Spaltenabstand AS und der Reihenabstand AR können zwischen 5 und 20 mm betragen. Der Durchmesser der aktiven Elektroden kann vorzugsweise zwischen 2 und 10 mm betragen.

Die Sender sind in Fig. 17A durch ein S und die Empfänger durch ein R gekennzeichnet. Die Sende- bzw. Empfangsfunktion ist diesen Elektroden jeweils fest zugeteilt, d.h. die Verdrahtung oder Beschaltung kann fest ausgelegt sein. Insgesamt gibt es hier 28 Empfänger R und 30 Sender S.

Die Elektroden 201 können aber auch jede andere Form haben, solange sie in die Zwischenräume 101 (nicht in Fig. 17A gekennzeichnet) passen.

Die Sender und die Empfänger können auch genau umgekehrt eingeteilt sein. Insgesamt gibt es dann 28 Sender S und 30 Empfänger R.

Fig. 18 zeigt eine schematische Draufsicht einer Gruppe 10 mit 20 aktiven Elektroden 201 (hier als weiss gefüllte Kreise gezeigt) und mit 3 x 4 Behältern (hier als schwarz gefüllte Kreise gezeigt). Es sind hier keine geerdeten Elektroden vorhanden. Diese Ausführungsform weist ein positives Übersprechen auf, hat aber gleichzeitig eine deutlichere Abhängigkeit des Signals von der Füllhöhe in den Behältern. Das Übersprechen kann bei einer solchen Ausführungsform mathematisch (durch Anwendung geeigneter Algorithmen) weitgehend kompensiert werden. Es werden zur Gewinnung von Kalibrationswerten vorzugsweise Testreihen durchgeführt. Diese so ermittelten Kalibrationswerte werden dann bei der "echten" Messung zur Kompensation herangezogen. Dieses Prinzip lässt sich auf alle Ausführungsformen anwenden. Vor allem eignet es sich für Ausführungsformen, die ohne geerdete Elektroden auskommen, wie in Fig. 18.

Da die Grösse und/oder Form und/oder Positionierung der geerdeten Elektroden das Übersprechen beeinflusst, kann man die eine geeignete Wahl, Dimensionierung und Positionierung der geerdeten Elektroden das Übersprechen minimieren. Fig. 19 zeigt eine schematische Draufsicht einer entsprechenden Gruppe 10 mit 15 aktiven Elektroden 201 (hier als weiss gefüllte Kreise gezeigt) und mit 3 x 4 Behältern (hier als schwarz gefüllte Kreise gezeigt). Die geerdeten Elektroden sind durch kleine weiss gefüllte Kreise dargestellt. Der Durchmesser der geerdeten Elektroden wurde hier so ermittelt, dass das Übersprechen minimal ist. Es ist ein Nachteil dieser Anordnung, dass jedoch das Nutzsignal r(t) kleiner ist als bei der Anordnung nach Fig. 18.

Fig. 20 zeigt eine schematische Draufsicht einer Gruppe 10 mit 15 aktiven Elektroden 201 (hier als weiss gefüllte Kreise gezeigt) und mit 3 x 4 Behältern (hier als schwarz gefüllte Kreise gezeigt). Die geerdeten Elektroden sind durch etwas grössere weiss gefüllte Kreise dargestellt. Der Durchmesser der geerdeten Elektroden ist hier grösser als in Fig. 19. Dadurch ist das Übersprechen negativ. Es ist ein Nachteil dieser Anordnung, dass jedoch das Nutzsignal r(t) noch kleiner ist als bei der Anordnung nach Fig. 19.

In einer weiteren bevorzugten Ausführungsform kommen zwei Ebenen zum Einsatz, die unterhalb der Bodenplatte 200 angeordnet oder in die Bodenplatte 200 integriert sein können. Eine dieser Ebenen kann die Leiterbahnen 202 zum Verbinden der Elektroden 201 mit der Sendeschaltung 57 oder Empfangsschaltung 58 umfassen, während auf einer zweiten Ebene elektronische Bauteile, Verstärker, Prozessoren (z.B. des Auswertemoduls 70) und eine Spannungsversorgung vorgesehen sind. In diesem Fall kann eine Baugruppe mit Bodenplatte 200 und den genannten Ebenen angeboten werden, die sämtliche Elemente der Vorrichtung 100 umfasst, die zur Füllstandsermittlung erforderlich sind. In diesem Fall wird lediglich eine Schnittstelle bereitgestellt, um Ergebnisse der Füllstandsermittlung an eine andere Baugruppe oder ein anderes Modul eines Geräts zu übergeben. Dieses Prinzip lässt sich auf alle Ausführungsformen anwenden.

In einer weiteren bevorzugten Ausführungsform kommt ein Referenzaufbau zum Einsatz, um Umgebungseinflüsse "ausblenden" zu können, dessen Eigenschaften genau bekannt sind. Vorzugsweise umfasst der Referenzaufbau ein Referenzelektrodenpaar, um z.B. die aktuelle Luftfeuchtigkeit ermitteln und in Abzug bringen zu können. Durch einen solchen Referenzaufbau können z.B. Alterungserscheinungen und Temperaturdrift ausgeglichen werden. Dieses Prinzip lässt sich auf alle Ausführungsformen anwenden.

Bei den verschiedenen Ausführungsformen kann die Form der permanent geerdeten Elektroden so gewählt werden, dass das Übersprechen möglichst reduziert wird.

Bei den verschiedenen Ausführungsformen kann eine Messumkehr an jedem Elektrodenpaar eingesetzt werden, um Asymmetrien erkennen und/oder ausschliessen zu können. Bei dem Verfahren der Messumkehr werden in einem ersten Schritt eine erste Elektrode 201.1 als Sender S und eine zweite diametral gegenüberstehende Elektrode 201.2 als Empfänger R eingesetzt. Nachdem ein Eingangssignal s(t) an die erste Elektrode 201.1 angelegt und das Signal r(t) an der zweiten Elektrode 201.2 abgegriffen wurde, wird in einem zweiten Schritt die Beschaltung umgekehrt und die zweite Elektrode 201.2 mit dem Eingangssignal s(t) beaufschlagt. Während des zweiten Schritts wird dann das Signal r(t) an der ersten Elektrode 201.2 abgegriffen. Durch ein Überlagern oder durch eine Differenzbildung können Asymmetrien erkannt und/oder ausgeschlossen werden.

Bei allen Ausführungsformen kann parallel zu dem Widerstand RA, der den negativen Eingang des Verstärkers 52 mit dem Ausgang des Verstärkers 52 verbindet, eine Parallelkapazität angeordnet sein. Die Parallelkapazität dient der Frequenzgangkompensation und Schwingungsvermeidung. Der Widerstand RA (mit oder ohne Parallelkapazität) bildet eine Rückkopplung oder Gegenkopplung.

Vorzugsweise ist der Verstärker 52 bei allen Ausführungsformen als invertierender Verstärker ausgelegt, wie in den Zeichnungen dargestellt. In diesem Fall stellen die invertierenden Eingänge (d.h. die mit einem Minuszeichen bezeichneten Eingänge) der Verstärker 52 virtuelle Massen dar.

Falls mehrere benachbarte Behälter 5 gleichzeitig gemessen werden sollen, ist es vorteilhaft, für die beiden Messungen Signale verschiedener Frequenzen zu verwenden, damit auf der Empfängerseite mittels Filterung oder Synchrondemodulation oder mittels beider Massnahmen die Beiträge der beiden Signale getrennt ermittelt und das Übersprechen minimiert wird. Statt verschiedener Frequenzen können gleiche Frequenzen mit unterschiedlicher Phasenlage verwendet werden, oder es können Modulationsverfahren verwendet werden, die eine Trennung der beiden Signalbeiträge ermöglichen. Diese Ansätze lassen sich auf alle Ausführungsformen anwenden.

Eine bevorzugte Vorrichtung 100 ist zum individuellen Messen des Füllstandes von Medien in zwei oder mehr im Wesentlichen aufrecht stehenden Behältern 5 ausgelegt. Diese Vorrichtung 100 umfasst Elektroden 201, die ausserhalb des zumindest einen Behälters 5 angeordnet sind. Die Vorrichtung 100 ist speziell zum Messen des Füllstandes in einer Vielzahl von gruppenartig angeordneten oder positionierbaren Behältern 5 ausgebildet. Sie umfasst eine im Wesentlichen horizontal angeordnete Bodenplatte 200 und eine Mehrzahl von gleichmässig angeordneten Elektroden 201, die im Wesentlichen aufrecht zu einer durch die Bodenplatte 200 definierten Horizontalebene E stehen und die jeweils so in einem Abstand zueinander angeordnet sind, dass sich zwischen je zwei Elektroden 201 jeweils eine Arbeitszone zur Aufnahme jeweils eines Behälters 5 der Gruppe 10 ergibt. Ein Teil dieser Elektroden 201 ist so ausgebildet und/oder beschaltet, dass sie als Sendeelement und ein Teil dieser Elektroden 201 ist so ausgebildet und/oder beschaltet, dass sie als Empfangselement ansteuerbar sind. Jeder der Behälter 5 kann in eine Arbeitszone zwischen jeweils zwei Elektroden 201 eingebracht oder angeordnet werden. Es sind elektrische Verbindungsleitungen 202 zum Ansteuern von als Sendeelement ausgewählten und/oder von zum Auslesen von als Empfangselement ausgewählten Elektroden 201 vorgesehen. Ein Ansteuermodul (z.B. mit einer Sendeschaltung 57) ist dazu ausgelegt, über die Verbindungsleitungen 202 die als Sendeelemente S dienenden Elektroden 201 mit einem Signal s(t) zum Senden anzuregen. Ein Auswertemodul (z.B. das Modul 70), ist dazu ausgelegt, über die Verbindungsleitungen 202 Signale r(t) von den als Empfangselement R dienenden Elektroden 201 zum empfangen und auszuwerten.

Vorzugsweise kommt auf der Empfangsseite, z.B. als Teil des Auswertemoduls 70 ein Übersprech-Modul 73 (siehe Fig. 15) zum rechnerischen Eliminieren des Übersprechens zum Einsatz. Das entsprechende Modul 73 beruht auf einer algorithmischen Kompensation oder Eliminierung des Übersprechens. Vorzugsweise wird das Übersprechen durch das Übersprech-Modul 73 mittels eines Algorithmus rechnerisch unterdrückt, wobei der Algorithmus abgespeicherte Referenzwerte einer Referenzmessung einbezieht. Diese Referenzwerte können z.B. aus dem optionalen Speicher 72 (siehe Fig. 15) entnommen werden.

Die Erfindung lässt sich auf Laborplatten, Mikroplatten, Stripracks, Tube-Reihen (z.B. eine streifenförmige Anordnung von Behältern 5 nach Fig. 2B oder 2C) und andere eingangs genannte Gruppen 10 anwenden. Je nach Form der Behälter 5 kann es bei kleinen Füllmengen zu Ungenauigkeiten bei der Messung kommen.

In einer besonders bevorzugten Ausführungsform dient die Bodenplatte 200 samt den Elektroden 201 nicht nur der kapazitiven Messung der Füllstände, wie beschrieben, sondern auch als Halter für einzelne Röhrchen oder Tubes (Behälter 5), die zu messen sind. Diese "Haltefunktion" lässt sich auf alle Ausführungsformen anwenden, deren Gruppen 10 aus einzelnen Behältern 5 zusammengesetzt sind.

Bei allen Ausführungsformen der Erfindung sind die Elektroden 201 von den Behältern 5 unabhängig. D.h. sie sind weder fest an den Behältern befestigt noch sind sie zum Beispiel in die Behälter 5 integriert.

Bei keiner Ausführungsform der Erfindung ist eine gemeinsame grossflächige Antenne oder Elektrodenplatte vorgesehen, sondern die Erfindung setzt einzelne, mindestens zum Teil individuell ansteuerbare, Elektroden 201 auf einer gemeinsamen Bodenplatte 20 ein.

Besonders gut geeignet sind Gruppen mit Behältern 5, die eine V-Boden oder Rundboden haben.

Die Erfindung lässt sich auch auf sogenannte "deep-wells" anwenden, bei denen das Verhältnis vom Durchmesser des Behälters 5 zur Tiefe T des Behälters 5 sehr klein ist.

Die Form der Behälter 5 kann beim Auswerten z.B. seitens des Auswertemoduls 70 berücksichtigt werden, um die Eigenschaften von ermittelten Ausgangssignalen r(t) besser ein- oder zuordnen zu können. Zu diesem Zweck kann eine maschinenlesbare Codierung der Gruppen 10, wie erwähnt, sinnvoll sein.

Aufgrund der Tatsache, dass nicht zwingend an allen Positionen Elektroden 201 positioniert sein müssen, lässt sich die Erfindung vorteilhaft auch auf Platten anwenden, die gewisse Asymmetrien in Form von Stegen oder dergleichen aufweisen. Solche Asymmetrien können bei Bedarf auf rechnerischem Wege herausgerechnet oder sogar komplett kompensiert werden. Voraussetzung hierfür ist aber, dass die Vorrichtung 100 den Typ der gegenwärtig zu messenden Gruppe 10 genau kennt. Auch hier kann die Codierung entsprechende Informationen liefern.

Um so genauer man die Eigenschaften der Flüssigkeiten 3 oder Medien kennt, die gemessen werden sollen, um so genauer kann die Füllstandsmessung durchgeführt werden. Zu diesem Zweck kann die Vorrichtung Mittel zum manuellen oder automatischen Einstellen oder Vorgeben entsprechender Werte aufweisen.

Die Erfindung hat den Vorteil, dass man in wenigen hundert Millisekunden eine ganze Gruppe 10 (z.B. eine Mikroplatte) mit einer grossen Anzahl N von Behältern 5 vermessen kann. Bisherige Lösungen, die z.B. auf Ultraschallbasis arbeiten, brauchen hierfür typischerweise mehrere Minuten.

Die Erfindung hat den Vorteil, dass sie berührungslos und verschmutzungsfrei arbeitet, da keine Fühler, Nadeln oder dergleichen in die Flüssigkeiten 3 oder Medien in den Behältern 5 eintauchen.

Es ist ein weiterer Vorteil der Erfindung, dass die Kosten für die Vorrichtung 100 vergleichsweise gering sind.

Die Erfindung ermöglicht nicht nur das korrekte Aspirieren und/oder Dispensieren durch eine begleitende (zeitgleiche) Füllstandsmessung auszuwerten, sondern sie ermöglicht auch das Ermitteln einer absoluten Flüssigkeitsmenge.

Da die Elemente der Vorrichtung 100 unterhalb der Gruppe 10 angeordnet sind, steht der Platz oberhalb der Gruppe 10 komplett für andere Baugruppen und Komponenten zur Verfügung.

Eine erfindungsgemässe Vorrichtung 100, respektive das erfindungsgemässe Verfahren können in verschiedenen Geräten und Apparaten eingesetzt werden. Es liegt auf der Hand, dass je nach Umgebung gewisse Anpassungen notwendig sind.

Die Erfindung ermöglicht eine Füllstandsmessung in jedem einzelnen Behälter 5 einer Gruppe 10, d.h. es sind individuelle Messungen möglich.

Die Erfindung ermöglicht auch ein Echtzeit-Monitoring der Füllstände in den einzelnen Behältern 5.

Die Erfindung bietet bei Flüssigkeiten eine Auflösung von ca. 1 µl, was deutlich besser ist als bei vorbekannten Lösungen. Bei realen Kapazitätsänderungen, beispielsweise bei Pipettieranwendungen, können diese Kapazitätsänderungen im Bereich von wenigen Femtofarad liegen. Die Vorrichtung 100 ist in der Lage solch kleine Änderungen trotz der unmittelbaren Nachbarschaft und der räumlich dicht gepackten Anordnung aller Elemente zuverlässig zu messen.

Die Erfindung lässt sich besonders vorteilhaft bei der Überwachung einer Eluation / Solid-Phase Extraction einsetzen, bei der eventuell ein Filter durchbrechen oder verstopfen kann. Mit dem Detektieren oder Beobachten der Füllstände kann überwacht werden, ob die Extraktion wie gewünscht abläuft. Durch das Beobachten der Füllstände mit einer erfindungsgemässe Vorrichtung 100 kann z.B. überwacht werden, ob ein Filter verstopft ist, da in diesem Fall nur wenig oder gar keine Flüssigkeit 3 im Behälter 5 ankommt. Falls es zu einem Durchbruch eines Filters kommt, kann dies durch die Vorrichtung 100 festgestellt werden, da die Flüssigkeitsmenge im Behälter 5 schlagartig zunimmt.

In einer weiteren bevorzugten Ausführungsform wird die Füllzustandsdetektion, die mittels rückseitiger Elektroden 201 durchgeführt wird, ergänzt durch das Zustellen und Eintauchen einer leitfähigen Nadel. Wenn diese Nadel das Flüssigkeitsniveau einer Flüssigkeit 3 in einem Behälter 5 erreicht, dann ergibt sich eine Feldstörung, die deutlich messbar ist. Eine solche Kombination kann bei Bedarf eingesetzt werden, um weitere Aussagen zu erhalten, die eventuell anderweitig nicht verfügbar sind.

**Bezugszeichen:**

| | |
|---|---|
| Sensoranordnung | 1 |
| Signalquelle | 2 |
| Flüssigkeit | 3 |
| | |
| Behälter | 5, 5.1, 5.2 - 5.N |
| Randständige Flüssigkeitsbehälter | 6 |
| | |
| Gruppen | 10 |
| (Mikro)Platte | 11 |
| Stege | 12 |
| | |
| Grundbaustein | 20 |
| Zickzack-Linie | 21 |
| | |
| Sender | 51 |
| Empfänger | 52; 52.1 bis 52.N |
| Effektiver Sender | 53 |
| Effektiver Empfänger | 54 |
| (Sinus-)Generator | 55 |
| Ausgang | 56 |
| Sendeschaltung | 57 |
| Empfangsschaltung | 58; 58.1 - 58.N |
| | |
| Mittel zur kapazitiven Flüssigkeitsdetektion | 60 |
| | |
| Auswertemodul | 70 |
| Multiplexer | 71 |
| Speicher | 72 |
| Übersprech-Modul | 73 |
| | |
| Vorrichtung | 100 |
| Zwischenräume | 101 |
| | |
| horizontale Bodenplatte | 200 |
| pfeilerartige Elektroden | 201; 201.1, 201.2 |
| elektrische Verbindungsleitung | 202 |
| nicht leitender Bereich | 203 |
| leitender Bereich | 204 |
| Zapfen | 205 |
| elektrisch leitende Fläche | 206 |
| Durchgangsloch | 207 |
| | |
| Laborgerät | 400 |
| | |
| Reihenabstand | AR |
| Spaltenabstand | AS |
| Breite eines rechteckigen, geerdeten Pfostens | BG |
| Kapazität | C |
| Kapazität | C_{G} |
| Behälterkapazität | C_{W} |
| Kapazität | C_{X} |
| Durchmesser einer runden Elektrode | ØDE |
| Behälterwiderstand | R_{W} |
| | |
| Empfangselektroden | E1, E2, ... |
| Erde (Ground) | G |
| Gesamtzahl der Elektroden | K |
| Länge | L |
| Anzahl Behälter | N |
| Anzahl der effektiv nutzbaren Behälter | N1 |
| Reihen | R |
| Widerstand | RA |
| Ausgangssignal | r(t); r1(t) bis rN(t) |
| Sendeelektrode | S |
| Spalten | Sp |
| Eingangssignal | s(t) |
| Tiefe | T |
| Tiefe eines rechteckigen, geerdeten Pfostens | TG |
| | |
| Positive Versorgungsspannung | V+ |
| Masse-Impedanz | Z_{G} |
| Behälterimpedanz | Z_{W} |
| Übersprech-Impedanz | Z_{X} |
| komplexe Impedanzen | **Z**_{ges}**,** Z1_{ges} bis ZN_{ges} |

## Patentansprüche

1. Vorrichtung (100) zum kapazitiven Ermitteln des Füllstandes in den einzelnen Behältern (5) einer Gruppe (10) von Behältern (5) gleicher Abmessungen, die horizontal in einem regelmässigen gegenseitigen Abstand nebeneinander in mehreren Reihen (R) und/oder Spalten (Sp) angeordnet sind, wobei die Vorrichtung (100) eine Sendeelektrode (S) und eine Empfangselektrode (R) sowie eine Messschaltung zum Durchführen eines kapazitiven Messverfahrens umfasst, wobei die Messschaltung eine Sendeschaltung (57) und eine Empfangsschaltung (58) umfasst und die Vorrichtung (100) aufweist:
- eine horizontale Bodenplatte (200), die eine Mehrzahl von Elektroden (201) umfasst, die in Bezug auf eine durch die Bodenplatte (200) definierte Horizontalebene (E) in einer Richtung hervorstehen, und die gegenseitig so gleichmässig beabstandet sind, dass sich eine Mehrzahl von Arbeitszonen gleicher Abmessungen ergeben, wobei die Grösse und Form der Arbeitszonen so ausgelegt ist, dass jede Arbeitszone einen Behälter (5) der Gruppe aufnehmen kann,
- mehrere Verbindungen (202), durch die ein Teil der Elektroden (201) mit der Sendeschaltung (57) verbindbar und durch die Sendeschaltung (57) ansteuerbar und ein Teil der Elektroden (201) mit der Empfangsschaltung (58) verbindbar und durch die Empfangsschaltung (58) auslesbar ist, wobei sich im Bereich einer jeden Arbeitszone in der Horizontalebene (E) mindestens je zwei der Elektroden (201) gegenüber stehen und wobei über die Verbindungen (202) jeweils eine dieser beiden Elektroden (201) als Sender und die andere der beiden Elektroden (201) als Empfänger einsetzbar sind.

2. Vorrichtung (100) nach Anspruch 1, **dadurch gekennzeichnet, dass** die Messschaltung ein Modul zur Kompensation oder zum Minimieren des Übersprechens zwischen benachbarten Elektroden (201) umfasst.

3. Vorrichtung (100) nach Anspruch 1 oder 2, **dadurch gekennzeichnet, dass** mindestens ein Teil der Elektroden (201) stets als Sender (S) und ein anderer Teil der Elektroden (201) stets als Empfänger (R) dient.

4. Vorrichtung (100) nach Anspruch 2, 3 oder 4, **dadurch gekennzeichnet, dass** die Elektroden (201) ein integraler Bestandteil der Bodenplatte (200) sind, oder dass die Elektroden (201) an der Bodenplatte (200) befestigt sind.

5. Vorrichtung (100) nach einem der vorhergehenden Ansprüche, **dadurch gekennzeichnet, dass** sie ein Auswertemodul (70) umfasst, das dazu ausgelegt ist Signale (r(t)) der als Empfänger (R) dienenden Elektroden (201) auszuwerten.

6. Vorrichtung (100) nach einem der vorhergehenden Ansprüche, **dadurch gekennzeichnet, dass** temporär eine Elektrode (201) pro Behälter (10) als Sender (S) so ansteuerbar und eine Elektrode (201) als Empfänger (R) so auslesbar sind, dass sich aufgrund einer vorbekannten, regelmässigen geometrischen Anordnung in Bezug auf Elektroden (201) benachbarter Behälter (10) eine geometrische Unterdrückung von Übersprechen durch Überlagern elektrischer Felder ergibt.

7. Vorrichtung (100) nach einem der vorhergehenden Ansprüche, **dadurch gekennzeichnet, dass** mindestens eine Elektrode (201) temporär oder permanent geerdet ist.

8. Vorrichtung (100) nach Anspruch 5, **dadurch gekennzeichnet, dass** in dem Auswertemodul (70) ein Algorithmus implementiert ist, um auf rechnerischem Wege eine Unterdrückung von Übersprechen zwischen benachbarten Behältern (5) vornehmen zu können.

9. Vorrichtung (100) nach Anspruch 2, **dadurch gekennzeichnet, dass** in dem Modul ein Algorithmus implementiert ist, um auf rechnerischem Wege eine Unterdrückung von Übersprechen zwischen den Elektroden (201) benachbarter Behälter (5) vornehmen zu können.

10. Vorrichtung (100) nach einem der vorhergehenden Ansprüche, **dadurch gekennzeichnet, dass** die Gruppe (10) eine Laborplatte, eine Mikroplatte, ein Striprack, eine Multiwellplatte oder eine Mikrotiterplatte ist.

11. Vorrichtung (100) nach einem der vorhergehenden Ansprüche, **dadurch gekennzeichnet, dass** die Vorrichtung (100) eine Laborplatte oder eine Mikroplatte oder ein Striprack oder eine Multiwellplatte oder eine Mikrotiterplatte umfasst, die auf die Vorrichtung (100) aufsetzbar ist.

12. Laborgerät (400), das mindestens eine Vorrichtung (100) nach einem der Ansprüche 1 bis 11 umfasst.

13. Kapazitives Messverfahren zum Durchführen von individuellen Füllstandsmessungen an einer Gruppe (10) von Behältern (5), die horizontal in einem regelmässigen gegenseitigen Abstand nebeneinander in mehreren Reihen (R) und/oder Spalten (Sp) angeordnet sind, mit den folgenden Schritten:
a. Aufsetzen der Gruppe (10) von Behältern (5) auf eine horizontale Bodenplatte (200), wobei an der Bodenplatte (200) eine Mehrzahl von pfeilerartigen Elektroden (201) angeordnet sind, die in Bezug auf eine durch die Bodenplatte (200) definierte Horizontalebene (E) in einer Richtung hervorstehen, und die gegenseitig so gleichmässig beabstandet sind, dass sich eine Mehrzahl von Arbeitszonen gleicher Abmessungen ergeben, sodass die pfeilerartigen Elektroden (201) beim Aufsetzen in Zwischenräume (101) zwischen den Behältern (5) eintauchen,
b. Ansteuern einer ersten der pfeilerartigen Elektroden (201.1), die sich neben einem ersten der mehreren Behälter (5.1) befindet, mit einem Sendesignal (s(t));
c. Auswerten eines Empfangssignals (r(t)), das über eine zweite der pfeilerartigen Elektroden (201.2) empfangen wurde, die gegenüber der ersten Elektrode (201.1) beabstandet ist, wobei diese zweite Elektrode (201.2) in Bezug zu dem ersten Behälter (5.1) der ersten pfeilerartigen Elektrode (201.1) gegenübersteht,
d. Wiederholen der Schritte b. und c. für jeden Behälter (5.x) der Gruppe (10), wobei jeweils eine der Elektroden (201.1) neben dem jeweiligen Behälter (5.x) als Sender (S) und eine gegenüber stehende Elektrode (201.1) neben dem selben Behälter (5.x) als Empfänger (R) dienen.

14. Verfahren nach Anspruch 13, **dadurch gekennzeichnet, dass** zusätzlich zu denjenigen Elektroden (201.1, 201.2), die als Sender (S) oder Empfänger (R) dienen, weitere Elektroden (201) vorhanden sind, die temporär oder permanent geerdet sind.

15. Verfahren nach Anspruch 13 oder 14, **dadurch gekennzeichnet, dass** mindestens eine der Elektroden (201.1, 201.2) in einem Schritt als Sender (S) und in einem anderen Schritt als Empfänger (R) eingesetzt wird.

16. Verfahren nach einem der Ansprüche 13 bis 15, **dadurch gekennzeichnet, dass** ein Multiplexverfahren zum Einsatz kommt, um alle als Sender (S) dienenden Elektroden (201.1) nacheinander mit einem Sendesignal (s(t)) zu beaufschlagen.

17. Verfahren nach einem der Ansprüche 13 bis 16, **dadurch gekennzeichnet, dass** ein Multiplexverfahren zum Einsatz kommt, um alle als Empfänger (R) dienenden Elektroden (201.2) nacheinander auslesen zu können.

18. Verfahren nach einem der Ansprüche 13 bis 17, **dadurch gekennzeichnet, dass** mittels eines Algorithmus Übersprechen rechnerisch minimiert oder kompensiert wird, wobei der Algorithmus abgespeicherte Referenzwerte einer Referenzmessung einbezieht.

19. Verfahren nach einem der Ansprüche 13 bis 17, **dadurch gekennzeichnet, dass** ein Teil der Elektroden vorgegebene Spannungspotentiale annehmen kann und dass dadurch parasitäre Kapazitäten wirkungslos geschaltet werden.

20. Verfahren nach Anspruch 13, **dadurch gekennzeichnet, dass** entweder ein Elektrodenpaar (201) nach dem anderen aktiviert wird, oder dass zwei oder mehrere Elektrodenpaare (201) gleichzeitig aktiviert werden, wobei in diesem Fall Elektrodenpaare (201) gewählt werden, die nicht direkt benachbart sind.

## Claims

1. An apparatus (100) for capacitive determination of the fill level in individual containers (5) of a group (10) of containers (5) of the same dimensions, which are disposed horizontally at a regular mutual distance adjacent to one another in a plurality of rows (R) and/or columns (Sp), wherein the apparatus (100) comprises a transmitter electrode (S) and a receiver electrode (R) as well as a measuring circuit for carrying out a capacitive measurement method, wherein the measuring circuit comprises a transmitting circuit (57) and a receiving circuit (58), and the apparatus (100) comprises:
- a horizontal base plate (200) comprising a plurality of electrodes (201) which protrude in one direction in relation to a horizontal plane (E) defined by the base plate (200) and which are mutually uniformly spaced apart such that a plurality of working zones of the same dimensions are formed, wherein the size and shape of the working zones are arranged such that each working zone can receive a container (5) of said group,
- multiple connections (202) through which a part of the electrodes (201) are connectable with the transmitting circuit (57) and can be controlled by means of the transmitting circuit (57), and a part of the electrodes (201) are connectable with the receiving circuit (58) and can be read out by means of the receiving circuit (58),
wherein in the area of each working zone in the horizontal plane (E) at least respectively two of said electrodes (201) are opposite to one another and wherein by means of the connections (202) respectively one of these two electrodes (201) is usable as transmitter and the other one of the two electrodes (201) is usable as receiver.

2. The apparatus (100) according to claim 1, **characterized in that** the measuring circuit comprises a module for compensating or for minimizing crosstalk between neighboring electrodes (201).

3. The apparatus (100) according to claim 1 or 2, **characterized in that** at least a part of the electrodes (201) always serves as transmitter (S) and another part of the electrodes (201) always serves as receiver (R).

4. The apparatus (100) according to claim 2, 3 or 4, **characterized in that** the electrodes (201) are an integral part of the base plate (200), or **in that** the electrodes (201) are fastened to the base plate (200).

5. The apparatus (100) according to one of the preceding claims, **characterized in that** this comprises an evaluation module (70), which is arranged to evaluate signals (r(t)) of the electrodes (201) serving as receiver (R).

6. The apparatus (100) according to one of the preceding claims, **characterized in that** temporarily one electrode (201) per container (10) is controllable as transmitter (S) and one electrode (201) can be read out as receiver (R) such that based on a previously known, regular geometric arrangement in relation to electrodes (201) of neighboring containers (10), a geometric suppression of crosstalk is achieved by means of superposing electrical fields.

7. The apparatus (100) according to one of the preceding claims, **characterized in that** at least one electrode (201) is temporarily or permanently grounded.

8. The apparatus (100) according to claim 5, **characterized in that** in the evaluation module (70) an algorithm is implemented in order to be able to suppress crosstalk between neighboring containers (5) in a computational manner.

9. The apparatus (100) according to claim 2, **characterized in that** in said module an algorithm is implemented in order to be able to suppress crosstalk between the electrodes (201) of neighboring containers (5) in a computational manner.

10. The apparatus (100) according to one of the preceding claims, **characterized in that** the group (10) comprises a laboratory plate, a microplate, a striprack, a multiwell plate or a microtiter plate.

11. The apparatus (100) according to one of the preceding claims, **characterized in that** the apparatus (100) comprises a laboratory plate or a microplate or a striprack or a multiwell plate or a microtiter plate, which can be placed on the apparatus (100).

12. A laboratory equipment (400), comprising at least one apparatus (100) according to one of claims 1 to 11.

13. A capacitive measuring method for carrying out individual fill level measurements on a group (10) of containers (5) which are disposed horizontally at a regular mutual distance adjacent to one another in a plurality of rows (R) and/or columns (Sp), comprising the following steps:
a. attaching the group (10) of containers (5) onto a horizontal base plate (200), wherein a plurality of pillar-like electrodes (201) are arranged on the horizontal base plate (200) which protrude in one direction in relation to a horizontal plane (E) defined by the base plate (200), and which are mutually uniformly spaced apart such that a plurality of working zones of the same dimensions are formed, such that the pillar-like electrodes (201) dip in intermediate spaces (101) between the containers (5) when attaching,
b. controlling a first one of said pillar-like electrodes (201.1), which is located adjacent to a first one of the plurality of containers (5.1), with a transmitted signal (s(t));
c. evaluating a received signal (r(t)) which was received via a second one of the pillar-like electrodes (201.2) which is located at a distance with respect to the first electrode (201.1), wherein this second electrode (201.2) is located opposite to the first pillar-like electrode (201.1) in relation to the first container (5.1),
d. repeating steps b. and c. for each container (5.x) of the group (10), wherein respectively one of said electrodes (201.1) adjacent to the respective container (5.x) serves as transmitter (S) and an opposing electrode (201.1) adjacent to the same container (5.x) serves as receiver (R).

14. The method according to claim 13, **characterized in that**, in addition to those electrodes (201.1, 201.2) which serve as transmitter (S) or receiver (R), further electrodes (201) are provided which are temporarily or permanently grounded.

15. The method according to claim 13 or 14, **characterized in that** at least one of the electrodes (201.1, 201.2) is used as transmitter (S) in one step and as receiver (R) in another step.

16. The method according to one of claims 13 to 15, **characterized in that** a multiplex method is used in order to successively load all electrodes (201.1) serving as transmitter (S) with a transmitted signal (s(t)).

17. The method according to one of claims 13 to 16, **characterized in that** a multiplex method is used in order to be able to successively read out all electrodes (201.2) serving as receiver (R).

18. The method according to one of claims 13 to 17, **characterized in that** by means of an algorithm crosstalk is minimized or compensated in a computational manner, wherein the algorithm factors in stored reference values of a reference measurement.

19. The method according to one of claims 13 to 17, **characterized in that** a part of the electrodes can receive predefined voltage potentials, and **in that** parasitic capacitances can thereby be rendered ineffective.

20. The method according to claim 13, **characterized in that** either one electrode pair (201) is activated after the other, or **in that** two or more electrode pairs (201) are activated simultaneously, wherein in this case electrode pairs (201) are selected which are not directly adjacent.

## Revendications

1. Dispositif (100) pour déterminer de façon capacitive le niveau de remplissage des différents récipients (5) d'un groupe (10) de récipients (5) de mêmes dimensions agencés horizontalement les uns à côté des autres, à distance régulière, en plusieurs rangées (R) et/ou colonnes (Sp), le dispositif (100) comprenant une électrode émettrice (S) et une électrode réceptrice (R) ainsi qu'un circuit de mesure pour effectuer un procédé de mesure capacitif, le circuit de mesure comprenant un circuit émetteur (57) et un circuit récepteur (58) et le dispositif (100) présentant :
- une plaque de base (200) horizontale comprenant une pluralité d'électrodes (201) qui font saillie dans une direction par rapport à un plan horizontal (E) défini par la plaque de base (200) et qui sont espacées de façon régulière de sorte qu'il en résulte une pluralité de zones de travail de mêmes dimensions, la taille et la forme des zones de travail étant conçues pour que chaque zone de travail puisse recevoir un récipient (5) du groupe,
- plusieurs liaisons (202) grâce auxquelles une partie des électrodes (201) peut être raccordée au circuit émetteur (57) et être commandée par le circuit émetteur (57) et une partie des électrodes (201) peut être raccordée au circuit récepteur (58) et être lue par le circuit récepteur (58), dans lequel il y a dans la région de chaque zone de travail dans le plan horizontal (E) au moins deux électrodes (201) et dans lequel, par le biais des liaisons (202), une de ces deux électrodes (201) peut être utilisée comme émetteur et l'autre électrode (201) comme récepteur.

2. Dispositif (100) selon la revendication 1, **caractérisé en ce que** le circuit de mesure comprend un module pour compenser ou pour réduire au minimum la diaphonie entre les électrodes adjacentes (201).

3. Dispositif (100) selon la revendication 1 ou 2, **caractérisé en ce qu'**au moins une partie des électrodes (201) sert toujours d'émetteur (S) et l'autre partie des électrodes (201) sert toujours de récepteur (R).

4. Dispositif (100) selon la revendication 2, 3 ou 4, **caractérisé en ce que** les électrodes (201) font partie intégrante de la plaque de base (200) ou **en ce que** les électrodes (201) sont fixées à la plaque de base (200).

5. Dispositif (100) selon l'une des revendications précédentes, **caractérisé en ce qu'**il comprend un module d'analyse (70) qui est conçu pour analyser les signaux (r(t)) des électrodes (201) servant de récepteurs (R).

6. Dispositif (100) selon l'une des revendications précédentes, **caractérisé en ce que**, temporairement, une électrode (201) par récipient (10) peut être commandée comme émetteur (S) et une électrode (201) être lue comme récepteur (R), de sorte que, du fait d'un agencement géométrique régulier connu au préalable des récipients adjacents (10) par rapport aux électrodes (201), on obtient une suppression géométrique des diaphonies par superposition des champs électriques.

7. Dispositif (100) selon l'une des revendications précédentes, **caractérisé en ce qu'**au moins une électrode (201) est mise à la terre de façon temporaire ou permanente.

8. Dispositif (100) selon la revendication 5, **caractérisé en ce qu'**il est mis en œuvre dans le module d'analyse (70) un algorithme pour pouvoir procéder, par voie mathématique, à la suppression des diaphonies entre les récipients adjacents (5).

9. Dispositif (100) selon la revendication 2, **caractérisé en ce qu'**il est mis en œuvre dans le module un algorithme pour pouvoir procéder, par voie mathématique, à la suppression des diaphonies entre les électrodes (201) de récipients adjacents (5).

10. Dispositif (100) selon l'une des revendications précédentes, **caractérisé en ce que** le groupe (10) est une plaque de laboratoire, une microplaque, un rack, une plaque multi-puits ou une plaque de microtitration.

11. Dispositif (100) selon l'une des revendications précédentes, **caractérisé en ce que** le dispositif (100) comprend une plaque de laboratoire, une microplaque, un rack, une plaque multi-puits ou une plaque de microtitration qui peut être installé sur le dispositif (100).

12. Appareil de laboratoire (400) comprenant au moins un dispositif (100) selon l'une des revendications 1 à 11.

13. Procédé de mesure capacitif pour effectuer des mesures de niveau de remplissage individuelles sur un groupe (10) de récipients (5) agencés horizontalement les uns à côté des autres, à intervalle régulier, en plusieurs rangées (R) et/ou colonnes (Sp), comprenant les étapes suivantes consistant à :
a. placer le groupe (10) de récipients (5) sur une plaque de base (200) horizontale, une pluralité d'électrodes (201) de type flèche étant agencée sur la plaque de base (200), lesquelles font saillie dans une direction par rapport à un plan horizontal (E) défini par la plaque de base (200) et sont espacées de façon régulière, de sorte qu'on obtient une pluralité de zones de travail de mêmes dimensions, de sorte que les électrodes (201) de type flèche, lorsqu'on les pose dans les interstices (101), plongent entre les récipients (5),
b. commander une première électrode de type flèche (201.1) qui se trouve à côté d'un premier récipient (5.1), avec un signal d'émission (s(t)) ;
c. analyser un signal de réception (r(t)) qui a été reçu par une deuxième électrode de type flèche (201.2) écartée de la première électrode (201.1), cette deuxième électrode (201.2) étant située face à la première électrode de type flèche (201.1) par rapport au premier récipient (5.1),
d. répéter les étapes b. et c. pour chaque récipient (5.x) du groupe (10), à chaque fois une des électrodes (201.1) à côté du récipient en question (5.x) servant d'émetteur (S) et une électrode opposée (201.1) à côté du même récipient (5.x) servant de récepteur (R).

14. Procédé selon la revendication 13, **caractérisé en ce qu'**en plus des électrodes (201.1, 201.2) qui servent d'émetteur (S) ou de récepteur (R), il y a d'autres électrodes (201) qui sont mises à la terre de façon temporaire ou permanente.

15. Procédé selon la revendication 13 ou 14, **caractérisé en ce qu'**au moins une des électrodes (201.1, 201.2) est utilisée dans une étape comme émetteur (S) et dans une autre étape comme récepteur (R).

16. Procédé selon l'une des revendications 13 à 15, **caractérisé en ce qu'**on utilise un procédé de multiplexage pour solliciter toutes les électrodes (201.1) servant d'émetteur (S) les unes après les autres avec un signal d'émission (s(t)).

17. Procédé selon l'une des revendications 13 à 16, **caractérisé en ce qu'**on utilise un procédé de multiplexage pour pouvoir lire toutes les électrodes (201.2) servant de récepteur (R) les unes après les autres.

18. Procédé selon l'une des revendications 13 à 17, **caractérisé en ce que** l'on réduit au minimum ou compense par voie mathématique, à l'aide d'un algorithme, les diaphonies, l'algorithme intégrant des valeurs de référence mémorisées d'une mesure de référence.

19. Procédé selon l'une des revendications 13 à 17, **caractérisé en ce qu'**une partie des électrodes peut accepter les potentiels de tension prédéterminés et **en ce que** cela commute les capacités parasites et les rend ainsi sans effet.

20. Procédé selon la revendication 13, **caractérisé en ce que** soit on active une paire d'électrodes (201) l'une après l'autre, soit on active deux paires d'électrodes (201) ou plus en même temps, auquel cas il faut choisir des paires d'électrodes (201) qui ne sont pas directement adjacentes.
